(19) Europäisches Patentamt
European Patent Office
Office européen des brevets

(11) **EP 3 931 719 B1**

(12) **EUROPEAN PATENT SPECIFICATION**

(45) Date of publication and mention
of the grant of the patent:
**03.04.2024 Bulletin 2024/14**

(21) Application number: **20922495.5**

(22) Date of filing: **16.10.2020**

(51) International Patent Classification (IPC):
***G06F 16/29*** (2019.01)   ***G01C 21/30*** (2006.01)

(52) Cooperative Patent Classification (CPC):
**G01C 21/30**

(86) International application number:
**PCT/CN2020/121582**

(87) International publication number:
**WO 2021/227358 (18.11.2021 Gazette 2021/46)**

(54) **MAPPING METHOD AND SYSTEM, AND STORAGE MEDIUM**

MAPPING-VERFAHREN UND -SYSTEM SOWIE SPEICHERMEDIUM

PROCÉDÉ ET SYSTÈME DE CARTOGRAPHIE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2020 CN 202010401109**

(43) Date of publication of application:
**05.01.2022 Bulletin 2022/01**

(73) Proprietor: **Guangzhou Xiaopeng Autopilot Technology Co., Ltd.**
**Guangzhou, Guangdong 510000 (CN)**

(72) Inventors:
• **CHAI, Wennan**
**Guangdong 510000 (CN)**
• **LIU, Zhongyuan**
**Guangdong 510000 (CN)**
• **JIANG, Shaofeng**
**Guangdong 510000 (CN)**
• **LI, Hongjun**
**Guangdong 510000 (CN)**
• **HUANG, Ya**
**Guangdong 510000 (CN)**
• **LAI, Jianming**
**Guangdong 510000 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
EP-A1- 3 508 823   CN-A- 106 610 294
CN-A- 107 451 526   CN-A- 110 000 786
CN-A- 110 175 654   CN-A- 111 639 148
US-A1- 2019 360 819   US-A1- 2020 074 193

• NIENHUSER D ET AL: "A Situation context aware Dempster-Shafer fusion of digital maps and a road sign recognition system", INTELLIGENT VEHICLES SYMPOSIUM, 2009 IEEE, IEEE, PISCATAWAY, NJ, USA, 3 June 2009 (2009-06-03), pages 1401-1406, XP031490053, ISBN: 978-1-4244-3503-6

**Description**

TECHNICAL FIELD

The present disclosure relates to the technical field of map construction, and particularly relates to a map constructing method and system and a storage medium.

BACKGROUND

Currently, vehicle navigation or map service and so on have a good performance in outdoor scenes where the satellite signal is good, but, in environments where the satellite signal is poor, for example, an underground car park in an indoor scene, they have a poor performance.

US 2020 / 0074193 A1 describes a method, system, and computer program product, for example, for learning about a road sign using clustering of pre-processed road sign recognition observations. In an example embodiment, the method may include receiving, by a layered clustering system, the pre-processed road sign recognition observations generated by at least one sensor installed on a vehicle. The pre-processed road sign recognition observations include at least two continuous-value attributes. The method may further include creating, by the layered clustering system, a first clustering label corresponding to a first attribute of the at least two continuous-value attributes for generating a plurality of first clusters. Additionally, the method may include sequentially clustering, by the layered clustering system, the pre-processed road sign recognition observations in the plurality of first clusters with the created first clustering label based on a second attribute of the at least two continuous-value attributes for generating a plurality of second clusters. Further, once the clustering of the pre-processed road sign recognition observations has been performed in this way, the method may further include filtering and removing, by the layered clustering system, outliers of the plurality of first clusters and the plurality of second clusters.

SUMMARY

The embodiments of the present disclosure disclose a map constructing method and system and a storage medium, which can be applied in an environment where the satellite signal is poor. This is achieved by the features of the independent claims. Further advantageous embodiments are subject-matter of the dependent claims. Hereinafter, before coming to a detailed description of the embodiments of the invention with reference to the attached drawings, some general aspects which are useful for contributing to the understanding of the inventive details in these embodiments are described below separately.

The first aspect of the embodiments of the present disclosure discloses a map constructing method, wherein the method comprises:

> acquiring a trajectory map to be matched Mvi;
> searching for a matched trajectory map Ms that matches with the trajectory map to be matched Mvi;
> performing map-element matching transformation between the trajectory map to be matched Mvi and the matched trajectory map Ms, wherein after the map-element transformation, the trajectory map to be matched Mvi and the matched trajectory map Ms are referred to as a map Mvi-X1 and a map Ms-X1 respectively;
> performing road-sign matching transformation between the map Mvi-X1 and the map Ms-X1, wherein after the road-sign matching transformation, the map Mvi-X1 and the map Ms-X1 are referred to as a map Mvi-X2 and a map Ms-X2 respectively;
> fusing characteristic data of road signs matched in the map Mvi-X2 and the map Ms-X2 by using a weighted averaging method, and replacing corresponding characteristic data in the map Ms-X2 by using the characteristic data of the road sign obtained after the fusion, wherein the map Ms-X2 whose characteristic data of the road sign have been replaced is referred to as a map Ms-X3; and
> adding roads and road map elements in the map Mvi-X1 that are not able to be matched into the map Ms-X3, wherein the map Ms-X3 that has been added the roads is referred to as a map Ms-X4.

The second aspect of the embodiments of the present disclosure discloses a map constructing system, wherein the system comprises:

> a receiving device configured for receiving an uploaded trajectory map to be matched Mvi;
> a map matching device configured for searching for a matched trajectory map Ms that matches with the trajectory map to be matched Mvi;
> a map-element-matching-transformation device configured for performing map-element matching transformation between the trajectory map to be matched Mvi and the matched trajectory map Ms, wherein after the map-element matching transformation, the trajectory map to be matched Mvi and the matched trajectory map Ms are referred to as a map Mvi-X1 and a map Ms-X1 respectively;

a road-sign-matching-transformation device configured for performing road-sign matching transformation between the trajectory map to be matched Mvi-X1 and the matched trajectory map Ms-X1 that are obtained after the map-element matching transformation, wherein after the road-sign matching transformation, the map Mvi-X1 and the map Ms-X1 are referred to as a map Mvi-X2 and a map Ms-X2 respectively;

a road-sign-characteristic-data fusing device configured for fusing characteristic data of road signs matched in the map Mvi-X2 and the map Ms-X2 by using a weighted averaging method, and replacing corresponding characteristic data in the map Ms-X2 by using the characteristic data of the road sign obtained after the fusion, wherein the map Ms-X2 whose characteristic data of the road sign have been replaced is referred to as a map Ms-X3; and

an adding device configured for adding roads and road map elements in the map Mvi-X1 that are not able to be matched into the map Ms-X3.

The third aspect of the embodiments of the present disclosure discloses a computer-readable storage medium, wherein the computer-readable storage medium stores a computer program, and the computer program causes a computer to implement the map constructing method according to the first aspect of the embodiments of the present disclosure.

As compared with the prior art, the embodiments of the present disclosure have the following advantageous effects: the map constructing method according to the embodiments of the present disclosure can perform map construction according to a map uploaded by a vehicle or other terminals, and can correct the map at the server according to the maps uploaded by a plurality of terminals, whereby the obtained map is more accurate.

BRIEF DESCRIPTION OF THE DRAWINGS

In order to more clearly illustrate the technical solutions of the embodiments of the present disclosure, the figures that are required to describe the embodiments will be briefly introduced below. Apparently, the figures that are described below are embodiments of the present disclosure, and a person skilled in the art can obtain other figures according to these figures without paying creative work.

Fig. 1 is a schematic flow chart of the map constructing method according to an embodiment of the present disclosure; and

Fig. 2 is a schematic structural diagram of the map constructing system according to an embodiment of the present disclosure.

DETAILED DESCRIPTION

The technical solutions of the embodiments of the present disclosure will be clearly and completely described below with reference to the drawings of the embodiments of the present disclosure. Apparently, the described embodiments are merely certain embodiments of the present disclosure, rather than all of the embodiments.

It should be noted that the terms such as "first", "second", "third" and "fourth" in the description and the claims of the present disclosure are intended to distinguish different objects, and are not intended to describe a particular sequence. The terms "comprise" and "have" and any variation thereof in the embodiments of the present disclosure are intended to cover non-exclusive inclusions. For example, a process, method, system, product or device that comprises a series of steps or units is not necessarily limited to those steps or units clearly listed, but may comprise other steps or units that are not clearly listed or that are inherent to the process, method, product or device.

The present disclosure will be described in detail below with reference to the drawings.

An embodiment of the present disclosure provides a map constructing method, which can generate a map by using a trajectory map sent by a vehicle or other terminals.

In an embodiment of the present disclosure, the trajectory map generated by the vehicle includes at least one of the following data: scene data, path-point data, path data and road-sign data, these data may also be referred to as map-element data. The vehicle, in travelling, acquires the data of the peripheral environment by using the sensors of the vehicle itself and/or other data sources, and in turn, according to the obtained environmental data, performs map construction to obtain the trajectory map, wherein the map-element data may usually be generated during the map construction or after the map construction has been completed. For example, in a particular scene of a parking lot, the method for generating the trajectory map at the vehicle may comprise: a vehicle entering the parking lot, and identifying the entrance of the parking lot by using a visual sensor to start the map construction; as the vehicle is travelling in the parking lot, the vehicle establishing the data such as the path, the path point and the road sign by using the collected data obtained via the sensor, and using the data as part of the trajectory map; and the vehicle, when driving out of the parking lot, identifying the exit, adding the data identified between the entrance and the exit into the trajectory map, and using the data of the entrance and the exit also as part of the trajectory map, to finally generate the trajectory map of the parking lot.

In an embodiment of the present disclosure, a more particular method for generating the trajectory map at the vehicle may, for example, comprise:

acquiring the movement characteristics of the vehicle in the movement process, and extracting critical characteristics from the movement characteristics by using a plurality of sliding windows;

according to the critical characteristics, calculating the identification credibilities of the target-trajectory road signs corresponding to the critical characteristics at the junctions between the sliding windows;

according to the identification credibilities, determining optimum-target-trajectory road signs from the target-trajectory road signs;

acquiring the road-sign data of the optimum-target-trajectory road signs, and associating the road-sign data with the position corresponding to the optimum-target-trajectory road signs in the trajectory map; and

accumulating the road-sign data of the optimum-target-trajectory road signs to construct the trajectory map.

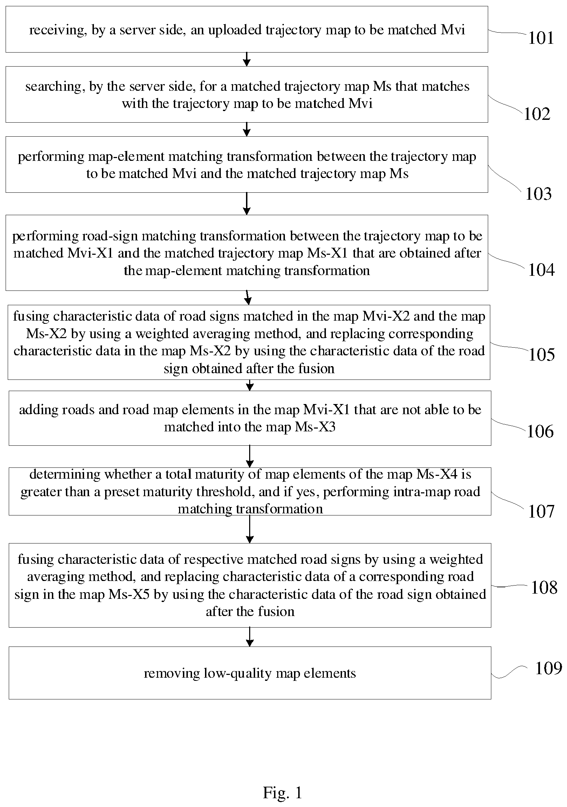

As shown in Fig. 1, an embodiment of the present disclosure provides a map constructing method, wherein the method comprises the following steps.

101: receiving, by a server, an uploaded trajectory map to be matched Mvi.

The server may particularly be a cloud, or a server having a certain computing power, or other particular forms.

In an embodiment of the present disclosure, the trajectory map to be matched Mvi refers to a trajectory map uploaded by a vehicle or other terminals, and the matched trajectory map Ms refers to a trajectory map pre-stored in the server.

102: searching, by the server, for a matched trajectory map Ms that matches with the trajectory map to be matched Mvi.

Usually, the server, according to the identification data of the trajectory map to be matched Mvi, searches at the server for a matched trajectory map Ms that matches with the trajectory map to be matched Mvi. Further, the particular searching process may comprise comparing the trajectory map in the server and the trajectory map to be matched Mvi, and determining that the trajectory map in the server and the trajectory map to be matched Mvi match with each other if they have the same or similar identification data.

The identification data of the trajectory map may, for example, be a certain datum of the trajectory map, for example, the entrance coordinate of the trajectory map.

The identification data of the trajectory map may also be multiple data of the trajectory map, for example, the entrance coordinate of the trajectory map and the exit coordinate of the trajectory map.

Regarding the case in which the identification data of the trajectory map are particularly the entrance coordinate of the trajectory map, at this point, the three-dimensional coordinates of the trajectory map in the server and the trajectory map to be matched may be compared, and if all of the difference values of the longitude coordinates, the latitude coordinates and the altitude coordinates are within preset upper limits, then it is considered that the trajectory map in the server and the trajectory map to be matched Mvi have similar identification data, and therefore the trajectory map in the server and the trajectory map to be matched Mvi match with each other.

In the same manner, regarding the case in which the identification data of the trajectory map are particularly multiple data of the trajectory map, for example the multiple data may be the entrance coordinate of the trajectory map and the exit coordinate of the trajectory map, the three-dimensional coordinates of the entrances and the three-dimensional coordinates of the exits of the trajectory map in the server and the trajectory map to be matched may be compared individually, and if all of the difference values of the longitude coordinates, the latitude coordinates and the altitude coordinates of the entrances are within preset upper limits, and all of the difference values of the longitude coordinates, the latitude coordinates and the altitude coordinates of the exits are also within preset upper limits, then it is considered that the trajectory map in the server and the trajectory map to be matched Mvi have similar identification data, and therefore the trajectory map in the server and the trajectory map to be matched Mvi match with each other.

Whether one datum or multiple data of the trajectory map are used as the identification data may be selected as two options. However, in some instances, the two options may also be used together. For example, firstly one datum may be used as the identification data, and when a plurality of matched trajectory maps are found by using the one datum as the identification data, a plurality of data may be used again as the identification data to search for the mostly matched trajectory map.

The process of searching for the matched trajectory map Ms that matches with the trajectory map to be matched Mvi may comprise comparing all of the maps in the server with the trajectory map to be matched Mvi, and subsequently obtaining the mostly same or similar trajectory map as the matched trajectory map Ms.

103: performing map-element matching transformation between the trajectory map to be matched Mvi and the matched trajectory map Ms.

In an embodiment of the present disclosure, a road-sign-data matching between the trajectory map to be matched Mvi and the matched trajectory map Ms is performed firstly, to acquire the matched road-sign data, then a map transformation matrix is acquired, and then, according to the map transformation matrix, rotation and translation to the map elements are performed. That will be described particularly below.

The step of performing map-element matching transformation between the trajectory map to be matched Mvi and the matched trajectory map Ms particularly comprises:

A1: matching road-sign data.

In an embodiment of the present disclosure, the matching of road-sign data refers to selecting a road sign in the trajectory map to be matched Mvi, and subsequently finding a road sign the same as or similar to that from the matched trajectory map Ms.

Regarding the road sign in the trajectory map to be matched Mvi, in some embodiments of the present disclosure, all of the road signs in the trajectory map to be matched Mvi may be matched according to a predetermined sequence. In some other embodiments of the present disclosure, however, some of the road signs in the trajectory map to be matched Mvi may be matched according to a predetermined rule.

Regarding the road sign in the matched trajectory map Ms, in some embodiments of the present disclosure, after one road sign to be matched in one trajectory map to be matched Mvi has been selected, it is required to compare all of the road signs in the matched trajectory map Ms with the road sign to be matched, and select, according to the comparison result, the mostly same or similar road sign as the matched road sign. In some other embodiments of the present disclosure, it is also capable to compare some of the road signs in the matched trajectory map Ms with the road sign to be matched in the selected trajectory map to be matched Mvi, and then, according to the comparison result, the mostly same or similar road sign is selected as the matched road sign.

After one road sign to be matched in the trajectory map to be matched Mvi has been selected, the process of then selecting one road sign in the matched trajectory map Ms and comparing it with the road sign to be matched to determine whether they match may particularly comprise calculating the matching degree between them. For example, a particular method for calculating the matching degree may comprise:

$$PPDlb=f(f(LXd1, LXy1), f(KXd1, KXy1), f(WZd1, WZy1), f(FXd1, FXy1), f(JLd1, JLy1));$$
wherein

PPDlb is the road-sign matching degree;

the road sign to be matched of the trajectory map to be matched Mvi is expressed as: LBd1 (LXd1, KXd1, WZd1, FXd1, JLd1);

LXd1, KXd1, WZd1, FXd1 and JLd1 sequentially represent the road-sign type, the credibility, the location, the direction and the distance from a road endpoint, respectively, of the road sign;

the road sign to be compared of the matched trajectory map Ms is expressed as: LBy1 (LXy1, KXy1, WZy1, FXy1, JLy1);

LXy1, KXy1, WZy1, FXy1 and JLy1 sequentially represent the road-sign type, the credibility, the location, the direction and the distance from a road endpoint, respectively, of the road sign;

f(LXd1, LXy1) is a road-sign-type-similarity function, and its result is obtained by calculating by using LXd1 and LXy1;

f(KXd1, KXy1) is a credibility-similarity function, and its result is obtained by calculating by using KXd1 and KXy1;

f(WZd1, WZy1) is a location-similarity function, and its result is obtained by calculating by using WZd1 and WZy1;

f(FXd1, FXy1) is a direction-similarity function, and its result is obtained by calculating by using FXd1 and FXy1; and

f(JLd1, JLy1) is a distance-similarity function, and its result is obtained by calculating by using JLd1 and JLy1.

After the above road-sign-parameter-similarity results have been obtained, the result of the road-sign matching degree is calculated according to the above function formula of PPDlb.

After one road sign to be matched of the trajectory map to be matched Mvi has been determined, the road signs to be compared of the matched trajectory map Ms are matched to it, to obtain a plurality of matching-degree results, and subsequently the road sign to be compared corresponding to the maximum value of the matching-degree results is selected as the matched road sign. Furthermore, the matching-degree result corresponding to the matched road sign should not be less than a preset minimum value, and if it is less than the preset minimum value, then the matched road sign is abandoned; in other words, it is considered that a matched road sign cannot be found.

After this step, for some or all of the road signs to be matched in the trajectory map to be matched Mvi, a matched road sign is found in the matched trajectory map Ms.

A2: according to data of matched road signs, calculating a map transformation matrix.

In some embodiments of the present disclosure, the map transformation matrix is calculated according to the locations and the maturities of the matched road signs.

The particular steps may include:

A2-1: according to the set of the road-sign points successfully matched in the trajectory map to be matched Mvi and the set of the matched road-sign points in the matched trajectory map Ms, acquiring a total rotation angle that enables the two sets of road-sign points to be fitted.

The total rotation angle refers to the sum between the angle of rotation of the trajectory map to be matched Mvi toward the matched trajectory map Ms and the angle of rotation of the matched trajectory map Ms toward the trajectory map to be matched Mvi. In some of the embodiments of the present disclosure, a required transformation matrix of the trajectory map to be matched that enables the two sets of matched road-sign points to reach the optimum fitting may be obtained according to an ICP (Iterative Closest Point) algorithm, wherein the transformation matrix contains a rotation matrix and translational quantities, and by extracting the rotation matrix, the total rotation angle may be calculated.

A2-2: according to the maturities of the trajectory map to be matched Mvi and the matched trajectory map Ms, calculating the respective rotation angles of the two trajectory maps.

The maturity of the maps is usually obtained according to the number of matching time. For example, if the trajectory map to be matched Mvi is matched for the first time, the number of matching time is 1, and therefore its maturity is 1. If the matched trajectory map Ms has been matched for X times previously, then the maturity at this time is X+1.

The respective rotation angles of the two maps may be calculated according to the following equations:

$$V1+V2=Va;$$

and

$$Q1*V2=Q2*V1;$$

Wherein,

V1 is the rotation angle of the trajectory map to be matched Mvi rotating toward the matched trajectory map Ms;
V2 is the rotation angle of the matched trajectory map Ms rotating toward the trajectory map to be matched Mvi;
Va is the total rotation angle;
Q1 is the maturity of the matched trajectory map Ms; and
Q2 is the maturity of the trajectory map to be matched Mvi.

A2-3: acquiring the location difference between the centroid points of the map elements in the two maps as the total translational quantity, and, according to the total translational quantity, calculating the respective translational quantities of the two maps.

The centroid point of the map elements in a map refers to the point of the mean value of the coordinate points of the map elements in the map.

The location difference refers to the difference between the coordinates.

The respective translational quantities of the two maps may be calculated according to the following equations:

$$T1+T2=Ta;$$

and

$$Q1*T2=Q2*T1;$$

Wherein,

T1 is the translational quantity of the trajectory map to be matched Mvi translating toward the matched trajectory map Ms;

T2 is the translational quantity of the matched trajectory map Ms translating toward the trajectory map to be matched Mvi;

Ta is the total translational quantity;

Q1 is the maturity of the matched trajectory map Ms; and

Q2 is the maturity of the trajectory map to be matched Mvi.

A2-4: according to the rotation angles and the translational quantities, constructing the map transformation matrix.

For example, a particular map transformation matrix of the trajectory map to be matched Mvi may be:

$$S1 = \begin{bmatrix} \cos V1 & -\sin V1 & T1_x \\ \sin V1 & \cos V1 & T1_y \\ 0 & 0 & 1 \end{bmatrix}$$

wherein V1 represents the rotation angle of the trajectory map to be matched Mvi rotating toward the matched trajectory map Ms;

$T1_x$ represents the component in the x-axis of the translational quantity of the trajectory map to be matched Mvi translating toward the matched trajectory map Ms; and

$T1_y$ represents the component in the y-axis of the translational quantity of the trajectory map to be matched Mvi translating toward the matched trajectory map Ms.

A particular map transformation matrix of the matched trajectory map Ms may, for example, be:

$$S2 = \begin{bmatrix} \cos V2 & -\sin V2 & T2_x \\ \sin V2 & \cos V2 & T2_y \\ 0 & 0 & 1 \end{bmatrix}$$

wherein V2 represents the rotation angle of the matched trajectory map Ms rotating toward the trajectory map to be matched Mvi;

$T2_x$ represents the component in the x-axis of the translational quantity of the matched trajectory map Ms translating toward the trajectory map to be matched Mvi; and

$T2_y$ represents the component in the y-axis of the translational quantity of the matched trajectory map Ms translating toward the trajectory map to be matched Mvi.

A3: according to the map transformation matrix, performing rotation and translation to the map elements in the trajectory map to be matched Mvi and the matched trajectory map Ms.

The rotation and translation to a certain map element refers to multiplying the transformation matrix by a pose matrix of the map element, to obtain a new pose matrix after the rotation and translation.

A particular transformation formula of the trajectory map to be matched Mvi may, for example, be:

$$\begin{bmatrix} NewLoc_x \\ NewLoc_y \\ 1 \end{bmatrix} = S1 \cdot \begin{bmatrix} Loc_x \\ Loc_y \\ 1 \end{bmatrix} = \begin{bmatrix} \cos V1 & -\sin V1 & T1_x \\ \sin V1 & \cos V1 & T1_y \\ 0 & 0 & 1 \end{bmatrix} \cdot \begin{bmatrix} Loc_x \\ Loc_y \\ 1 \end{bmatrix}$$

wherein

$$\begin{bmatrix} NewLoc_x \\ NewLoc_y \\ 1 \end{bmatrix}$$

is the new pose matrix of the map element of the trajectory map to be matched Mvi after the rotation and translation;

S 1 is the map transformation matrix of the trajectory map to be matched Mvi, which may particularly be:

$$S1 = \begin{bmatrix} \cos V1 & -\sin V1 & T1_x \\ \sin V1 & \cos V1 & T1_y \\ 0 & 0 & 1 \end{bmatrix};$$

and

$$\begin{bmatrix} Loc_x \\ Loc_y \\ 1 \end{bmatrix}$$

is the pose matrix of the map element of the trajectory map to be matched Mvi before the rotation and translation.

A particular transformation formula of the matched trajectory map Ms may, for example, be:

$$\begin{bmatrix} NewLoc_{sx} \\ NewLoc_{sy} \\ 1 \end{bmatrix} = S2 \cdot \begin{bmatrix} Loc_{sx} \\ Loc_{sy} \\ 1 \end{bmatrix} = \begin{bmatrix} \cos V2 & -\sin V2 & T2_x \\ \sin V2 & \cos V2 & T2_y \\ 0 & 0 & 1 \end{bmatrix} \cdot \begin{bmatrix} Loc_{sx} \\ Loc_{sy} \\ 1 \end{bmatrix}$$

wherein

$$\begin{bmatrix} NewLoc_{sx} \\ NewLoc_{sy} \\ 1 \end{bmatrix}$$

is the new pose matrix of the map element of the matched trajectory map Ms after the rotation and translation;

S2 is the map transformation matrix of the matched trajectory map Ms, which may particularly be:

$$S2 = \begin{bmatrix} \cos V2 & -\sin V2 & T2_x \\ \sin V2 & \cos V2 & T2_y \\ 0 & 0 & 1 \end{bmatrix};$$

and

$$\begin{bmatrix} Loc_{sx} \\ Loc_{sy} \\ 1 \end{bmatrix}$$

is the pose matrix of the map element of the matched trajectory map Ms before the rotation and translation.

In an embodiment of the present disclosure, in order for brevity of description, after the map-element matching transformation is performed, the trajectory map to be matched Mvi is referred to as a map Mvi-X1, and after the map-element matching transformation is performed, the matched trajectory map Ms is referred to as a map Ms-X1.

104: performing road-sign matching transformation between the trajectory map to be matched Mvi-X1 and the matched trajectory map Ms-X1 that are obtained after the map-element matching transformation.

In an embodiment of the present disclosure, firstly, the road data and the road-sign data of the map Mvi-X1 and the map Ms-X1 are matched, to acquire the matched road data and matched road-sign data, then a road transformation matrix is acquired, and then rotation and translation is performed to the map elements in the matched road according to the road transformation matrix. That will be described particularly below.

The step of performing road-sign matching transformation between the map Mvi-X1 and the map Ms-X1 particularly comprises:

B1: matching road data.

In an embodiment of the present disclosure, the matching of road data refers to selecting a road in the map Mvi-X1, and subsequently finding a road the same as or similar to that from the map Ms-X1.

Regarding the road in the map Mvi-X1, in some embodiments of the present disclosure, all of the roads in the map Mvi-X1 may be matched according to a predetermined sequence. In some other embodiments of the present disclosure, however, some of the roads in the map Mvi-X1 may be matched according to a predetermined rule.

Regarding the road in the map Ms-X1, in some embodiments of the present disclosure, after one road to be matched in the map Mvi-X1 has been selected, it is required to compare all of the roads in the map Ms-X1 with the road to be matched, and select, according to the comparison result, the mostly same or similar road as the matched road. In some other embodiments of the present disclosure, it is capable to compare some of the roads in the map Ms-X1 with the road to be matched in the selected map Mvi-X1, and then, according to the comparison result, the mostly same or similar road is selected as the matched road.

After one road to be matched in the map Mvi-X1 has been selected, the process of then selecting one road in the map Ms-X1 and comparing the road to be matched with the one road in the map to determine whether they match may particularly comprise calculating the matching degree between them. For example, a particular method for calculating the matching degree may comprise:

$$PPDdl = f(f(DDd1, DDy1), f(LJDd1, LJDy1), f(LJGXd1, LJGXy1));$$

wherein

PPDdl is the road matching degree;
the road to be matched of the map Mvi-X1 is: DLd1 (DDd1, LJDd1, LJGXd1);
DDd1, LJDd1 and LJGXd1 sequentially represent the endpoint location, the overall path-point direction and the connection relation with a neighboring road, respectively, of the road;
the road to be compared of the map Ms-X1 is: DLy1 (DDy1, LJDy1, LJGXy1);
DDy1, LJDy1 and LJGXy1 sequentially represent the endpoint location, the overall path-point direction and the connection relation with a neighboring road, respectively, of the road;
f(DDd1, DDy1) is an endpoint-location-similarity function, and its result is obtained by calculating by using DDd1 and DDy1;
f(LJDdl, LJDy1) is an overall-path-point-direction-similarity function, and its result is obtained by calculating by using LJDd1 and LJDy1; and
f(LJGXd1, LJGXy1) is a connection-relation-with-neighboring-road-similarity function, and its result is obtained by calculating by using LJGXd1 and LJGXy1.

After the above road-parameter-similarity results have been obtained, according to the above function formula of PPDdl, the result of the road matching degree is calculated.

After one road to be matched of the map Mvi-X1 has been determined, the roads to be compared of the map Ms-X1 are matched to it, to obtain a plurality of matching-degree results, and subsequently the road to be compared corresponding to the maximum value of the matching-degree results is selected as the matched road. Furthermore, the matching-degree result corresponding to the matched road should not be less than a preset minimum value, and if it is less than the preset minimum value, then the matched road is abandoned; in other words, it is considered that a matched road cannot be found.

After this step, for some or all of the roads to be matched in the map Mvi-X1, a matched road is found in the map Ms-X1.

B2: matching road signs contained in matched roads in the map Mvi-X1 and the map Ms-X1.

Regarding the road sign of the matched road in the map Mvi-X1, in some embodiments of the present disclosure, all of the road signs of the matched road correspondingly matched in the map Mvi-X1 may be matched according to a predetermined sequence. In some other embodiments of the present disclosure, however, some of the road signs of the matched road correspondingly matched in the map Mvi-X1 may be matched according to a predetermined rule.

Regarding the road sign of the matched road in the map Ms-X1, in some embodiments of the present disclosure, after one road sign of the road to be matched in the map Mvi-X1 has been selected, it is required to compare all of the road signs of the corresponding matched road in the map Ms-X1 with the road sign of the road to be matched, and select, according to the comparison result, the mostly same or similar road sign as the matched road sign. In some other embodiments of the present disclosure, it is capable to compare some of the road signs of the corresponding matched road in the map Ms-X1 with the road signs of the matched road in the selected map Mvi-X1, and then, according to the comparison result, the mostly same or similar road sign is selected as the matched road sign.

After one road sign to be matched of the matched road in the map Mvi-X1 has been selected, the process of then selecting one road sign of the corresponding matched road in the map Ms-X1 and comparing the road sign to be matched with the road sign of the corresponding matched road in the map to determine whether they match may particularly comprise calculating the matching degree between them. For example, a particular method for calculating the matching degree may comprise:

$$PPDdllb=f(f(LXdld1, LXdly1), f(KXdld1, KXdly1), f(WZdld1, WZdly1), f(FXdld1, FXdly1), f(JLdld1, JLdly1));$$

wherein

the road sign to be matched of the matched road in the map Mvi-X1 is: LBdld1 (LXdld1, KXdld1, WZdld1, FXdld1, JLdld1);

LXdld1, KXdld1, WZdld1, FXdld1 and JLdld1 sequentially represent the road-sign type, the credibility, the location, the direction and the distance from a road endpoint, respectively, of the road sign;

the road sign to be compared of the corresponding matched road in the map Ms-X1 is: LBdlyl (LXdly1, KXdly1, WZdly1, FXdly1, JLdly1);

LXdly1, KXdly1, WZdly1, FXdly1 and JLdly1 sequentially represent the road-sign type, the credibility, the location, the direction and the distance from a road endpoint, respectively, of the road sign;

PPDdllb is the road-sign matching degree;

f(LXdld1, LXdly1) is a road-sign-type-similarity function, and its result is obtained by calculating by using LXdld1 and LXdly1;

f(KXdld1, KXdly1) is a credibility-similarity function, and its result is obtained by calculating by using KXdld1 and KXdly1;

f(WZdld1, WZdly1) is a location-similarity function, and its result is obtained by calculating by using WZdld1 and WZdly1;

f(FXdld1, FXdly1) is a direction-similarity function, and its result is obtained by calculating by using FXdld1 and FXdly1; and

f(JLdldl, JLdly1) is a distance-similarity function, and its result is obtained by calculating by using JLdld1 and JLdly1.

After the above road-sign-parameter-similarity results have been obtained, according to the above function formula of PPDdllb, the result of the road-sign matching degree is calculated.

After one road sign to be matched of the matched road in the map Mvi-X1 has been determined, the road signs to be compared of the corresponding matched road in the map Ms-X1 are matched to it, to obtain a plurality of matching-degree results, and subsequently the road sign to be compared corresponding to the maximum value of the matching-degree results is selected as the matched road sign. Furthermore, the matching-degree result corresponding to the matched road sign should not be less than a preset minimum value, and if it is less than the preset minimum value, then the matched road sign is abandoned; in other words, it is considered that a matched road sign cannot be found.

B3: according to data of matched road signs, calculating a road transformation matrix.

In some embodiments of the present disclosure, the road transformation matrix is calculated according to the locations and the maturities of the matched road signs.

The particular steps may include:

B3-1: according to the set of the matched road-sign points in the map Mvi-X1 and the set of the matched road-sign points in the map Ms-X1, acquiring a total road-sign matching rotation angle that enables the two sets of road-sign points to be fitted.

The total road-sign matching rotation angle refers to the sum between the angle of rotation of the set of the matched road-sign points in the map Mvi-X1 toward the set of the matched road-sign points in the map Ms-X1 and the angle of rotation of the set of the matched road-sign points in the map Ms-X1 toward the set of the matched road-sign points in the map Mvi-X1. In some embodiments of the present disclosure, a required road transformation matrix that enables the two sets of matched road-sign points to reach the optimum fitting may be obtained according to an ICP (Iterative Closest Point) algorithm, wherein the road transformation matrix contains a road rotation matrix and road matching translational quantities, and by extracting the road rotation matrix, the total road-sign matching rotation angle may be calculated.

B3-2: according to the maturities of the set of the matched road-sign points in the map Mvi-X1 and the set of the matched road-sign points in the map Ms-X1, calculating the respective road-sign matching rotation angles of the two sets.

The maturity of a set of road-sign points refers to the sum of the maturities of the road-sign points contained in it.

The respective road-sign matching rotation angles of the two maps may be calculated according to the following equations:

$$Vk1+Vk2=Vka;$$

and

$$Q1*Vk2=Q2*Vk1;$$

Wherein,

Vk1 is the road-sign matching rotation angle of the set of the matched road-sign points in the map Mvi-X1 toward the set of the matched road-sign points in the map Ms-X1;
Vk2 is the road-sign matching rotation angle of the set of the matched road-sign points in the map Ms-X1 toward the set of the matched road-sign points in the map Mvi-X1;
Vka is the total road-sign matching rotation angle;
Q1 is the maturity of the set of the matched road-sign points in the map Mvi-X1; and
Q2 is the maturity of the set of the matched road-sign points in the map Ms-X1.

B3-3: acquiring the location difference between the centroid points of the set of the matched road-sign points in the map Mvi-X1 and the set of the matched road-sign points in the map Ms-X1 as the total road-sign matching translational quantity, and, according to the total road-sign matching translational quantity, calculating the respective road-sign matching translational quantities of the two sets of road-sign points.

The centroid point of a set of road-sign points refers to the point of the mean value of the coordinates of the road-sign points in the set of road-sign points.

The respective road-sign matching translational quantities of the two sets of road-sign points may be calculated according to the following equations:

$$Tk1+Tk2=Tka;$$

and

$$Q1*Tk2=Q2*Tk1;$$

Wherein,

Tk1 is the road-sign matching translational quantity of the set of the matched road-sign points in the map Mvi-X1 translating toward the set of the matched road-sign points in the map Ms-X1;

Tk2 is the road-sign matching translational quantity of the set of the matched road-sign points in the map Ms-X1 translating toward the set of the matched road-sign points in the map Mvi-X 1;

Tka is the total road-sign matching translational quantity;

Q1 is the maturity of the set of the matched road-sign points in the map Ms-X1;

Q2 is the maturity of the set of the matched road-sign points in the map Mvi-X1; and

B3-4: according to the road-sign matching rotation angles and the road-sign matching translational quantities, constructing the road transformation matrix.

For example, a particular road transformation matrix of the set of the matched road-sign points in the map Mvi-X1 may, for example, be:

$$Sk1 = \begin{bmatrix} \cos Vk1 & -\sin Vk1 & Tk1_x \\ \sin Vk1 & \cos Vk1 & Tk1_y \\ 0 & 0 & 1 \end{bmatrix}$$

wherein Vk1 is the road-sign matching rotation angle of the set of the matched road-sign points in the map Mvi-X1 toward the set of the matched road-sign points in the map Ms-X1;

$Tk1_x$ represents the component in the x-axis of the road-sign matching translational quantity of the set of the matched road-sign points in the map Mvi-X1 translating toward the set of the matched road-sign points in the map Ms-X1; and

$Tk1_y$ represents the component in the y-axis of the road-sign matching translational quantity of the set of the matched road-sign points in the map Mvi-X1 translating toward the set of the matched road-sign points in the map Ms-X1.

A particular road transformation matrix of the set of the matched road-sign points in the map Ms-X1 may, for example, be:

$$Sk2 = \begin{bmatrix} \cos Vk2 & -\sin Vk2 & Tk2_x \\ \sin Vk2 & \cos Vk2 & Tk2_y \\ 0 & 0 & 1 \end{bmatrix}$$

wherein Vk2 represents the road-sign matching rotation angle of the set of the matched road-sign points in the map Ms-X1 toward the set of the matched road-sign points in the map Mvi-X1;

$Tk2_x$ represents the component in the x-axis of the road-sign matching translational quantity of the set of the matched road-sign points in the map Ms-X1 translating toward the set of the matched road-sign points in the map Mvi-X1; and

Tk2y represents the component in the y-axis of the road-sign matching translational quantity of the set of the matched road-sign points in the map Ms-X1 translating toward the set of the matched road-sign points in the map Mvi-X1.

B4: according to the road transformation matrix, performing rotation and translation to the map elements of a matched road in the map Mvi-X1 and the map elements of a matched road in the map Ms-X1.

The rotation and translation refer to multiplying the road transformation matrix by a position-pose matrix of the road-sign points, to obtain a new pose matrix after the rotation and translation.

After the rotation and translation, new positions and poses of the matched road-sign points can be obtained.

A particular transformation formula of the matched road-sign points in the map Mvi-X1 may, for example, be:

$$\begin{bmatrix} NewDLLoc_x \\ NewDLLoc_y \\ 1 \end{bmatrix} = \text{Sk1} \cdot \begin{bmatrix} DLLoc_x \\ DLLoc_y \\ 1 \end{bmatrix} = \begin{bmatrix} \cos Vk1 & -\sin Vk1 & Tk1_x \\ \sin Vk1 & \cos Vk1 & Tk1_y \\ 0 & 0 & 1 \end{bmatrix} \cdot \begin{bmatrix} DLLoc_x \\ DLLoc_y \\ 1 \end{bmatrix}$$

wherein

$$\begin{bmatrix} NewDLLoc_x \\ NewDLLoc_y \\ 1 \end{bmatrix}$$

is the new pose matrix of the road-sign points after the rotation and translation;

Sk1 is the road transformation matrix of the map Ms-X1, which may particularly be:

$$\text{Sk1} = \begin{bmatrix} \cos Vk1 & -\sin Vk1 & Tk1_x \\ \sin Vk1 & \cos Vk1 & Tk1_y \\ 0 & 0 & 1 \end{bmatrix};$$

and

$$\begin{bmatrix} Loc_x \\ Loc_y \\ 1 \end{bmatrix}$$

is the pose matrix of the road-sign points before the rotation and translation.

In an embodiment of the present disclosure, in order for brevity of description, the map Mvi-X1 obtained after the road-sign matching transformation is referred to as a map Mvi-X2, and the map Ms-X1 obtained after the road-sign matching transformation is referred to as a map Ms-X2.

105: fusing characteristic data of road signs matched in the map Mvi-X2 and the map Ms-X2 by using a weighted averaging method, and replacing corresponding characteristic data in the map Ms-X2 by using the characteristic data of the road sign obtained after the fusion.

The particular fusing method may, for example, be as follows.

The matched road sign in the map Mvi-X2 may be expressed as: NLBdld1 (NLXdld1, NKXdldl, NWZdld1, NFXdld1, NJLdld1);

wherein NLXdld1, NKXdldl, NWZdld1, NFXdld1 and NJLdld1 sequentially represent the road-sign type, the credibility, the location, the direction and the distance from a road endpoint, respectively, of the matched road sign.

Correspondingly to the road sign NLBdld1, the corresponding matched road sign in the map Ms-X2 is expressed as: NLBdly1 (NLXdly1, NKXdly1, NWZdly1, NFXdly1, NJLdly1);

wherein NLXdly1, NKXdly1, NWZdly1, NFXdly1 and NJLdly1 sequentially represent the road-sign type, the credibility, the location, the direction and the distance from a road endpoint, respectively, of the matched road sign.

According to the matched road-sign data of the map Mvi-X2 and the matched road-sign data of the map Ms-X2, the characteristic data in them are fused by using a weighted averaging method, which particularly comprises:

$$\text{RHKX} = \frac{NKXd1d * Q1 + NKXd1yl * Q2}{Q1 + Q2}$$

$$\text{RHWZ} = \frac{NWZd1d * Q1 + NWZd1yl * Q2}{Q1 + Q2}$$

$$RHFX = \frac{NFXd1d * Q1 + NFXd1y1 * Q2}{Q1 + Q2}$$

$$RHJL = \frac{NJLd1d * Q1 + NJLd1y1 * Q2}{Q1 + Q2}$$

wherein RHKX, RHWZ, RHFX and RHJL sequentially represent the credibility, the position, the direction and the distance from a road endpoint, respectively, after the fusion;
Q1 is the maturity of the matched road sign in the map Mvi-X2; and
Q2 is the maturity of the matched road sign in the map Ms-X2.

This step further comprises replacing corresponding characteristic data in the map Ms-X2 by using the characteristic data of the road sign obtained after the fusion, wherein the map Ms-X2 whose characteristic data of the road sign have been replaced is referred to as a map Ms-X3.

Besides the above fusion of the road-sign data, in this step, further, the updating time points of the road signs may also be fused, i.e., comparing the updating time points of the two road signs, and using the later updating time point of them as the updating time point of the road sign obtained after the fusion. The updating time point is recorded, and the updating time point may be used as a parameter that is taken into consideration when road-sign removal is required, wherein the particular method of the road-sign removal will be described in the corresponding subsequent steps.

106: adding roads and road map elements in the map Mvi-X1 that are not able to be matched into the map Ms-X3.

After the above step of road-sign matching transformation, usually some of the roads in the map Mvi-X1 can find its matched road in the map Ms-X1, and some of the roads cannot find its matched road. Therefore, those roads and road map elements that cannot be matched will be added into the map Ms-X3 as part of the map Ms-X3, wherein the map Ms-X3 that has been added the roads and the road map elements is referred to as a map Ms-X4.

After the map Ms-X4 has been obtained, it can be considered that the map construction has been completed. The above map constructing method can perform map construction according to a map uploaded by a vehicle or other terminals, and can correct the map at the server according to the maps uploaded by a plurality of terminals, whereby the obtained map is more accurate.

107: determining whether a total maturity of map elements of the map Ms-X4 is greater than a preset maturity threshold, and if yes, performing intra-map road matching transformation.

As stated above, the maturity of the trajectory maps is increased by 1 after each one time of the matching, and, likewise, the maturity of each of the map elements in the trajectory maps is increased by 1 after each one time of the matching. The total maturity of the map elements in the trajectory map refers to the numerical value that is obtained by summing the maturities of all of the map elements in the trajectory map.

After the total maturity has reached a preset maturity threshold, intra-map road matching transformation will be performed, which particularly comprises the following steps:
C1: matching intra-map road data.

In an embodiment of the present disclosure, the matching of intra-map road data refers to selecting one road in the map Ms-X4, and then finding a road the same as or similar to that from the other roads in the map Ms-X4; and, then, by using the same method, matching all of the roads in the trajectory map with the other roads, to seek the same or similar roads.

After two roads have been selected, one of the methods of determining whether they match may, for example, comprise:

PPDdl=f(f(DDd1, DDy1), f(LJDdl, LJDy1), f(LJGXd1, LJGXy1));
wherein
PPDdl is the road matching degree;
the road to be matched of the map Ms-X4 is: DLd1 (DDd1, LJDd1, LJGXd1); and
DDd1, LJDd1 and LJGXd1 sequentially represent the endpoint location, the overall path-point direction and the connection relation with a neighboring road, respectively, of the road.

The matched road of the map Ms-X4 is: DLy1 (DDy1, LJDy1, LJGXy1);

DDy1, LJDy1 and LJGXy1 sequentially represent the endpoint location, the overall path-point direction and the connection relation with a neighboring road, respectively, of the road;
f(DDd1, DDy1) is an endpoint-location-similarity function, and its result is obtained by calculating by using DDd1 and DDy1;

f(LJDd1, LJDy1) is an overall-path-point-direction-similarity function, and its result is obtained by calculating by using LJDd1 and LJDy1; and

f(LJGXd1, LJGXy1) is a connection-relation-with-neighboring-road-similarity function, and its result is obtained by calculating by using LJGXd1 and LJGXy1.

After the above road-parameter-similarity results have been obtained, according to the above function formula of PPDdl, the result of the road matching degree is calculated.

After one road to be matched of the map Ms-X4 has been determined, the other roads of the map Ms-X4 are matched to it, to obtain a plurality of matching-degree results, and subsequently the matched road corresponding to the maximum value of the matching-degree results is selected as the matched road. Furthermore, the matching-degree result should not be less than a preset minimum value, and if it is less than the preset minimum value, then the matched road is abandoned; in other words, it is considered that a matched road cannot be found.

After this step, some or all of the roads in the map Ms-X4 will find its matched road.

C2: matching road signs contained in a matched road.

After one road sign to be matched of the matched road in the map Ms-X4 has been selected, the process of then selecting one road sign of the matched road and comparing to determine whether they match may particularly comprise calculating the matching degree between them. For example, a particular method for calculating the matching degree may comprise:

PPDdllb=f(f(LXdld1, LXdly1), f(KXdld1, KXdly1), f(WZdld1, WZdly1), f(FXdld1, FXdly1), f(JLdldl, JLdly1));

wherein

The road sign to be matched of the matched road in the map Ms-X4 is: LBdld1 (LXdld1, KXdld1, WZdld1, FXdld1, JLdld1);

LXdld1, KXdld1, WZdld1, FXdld1 and JLdld1 sequentially represent the road-sign type, the credibility, the location, the direction and the distance from a road endpoint, respectively, of the road sign;

the road sign to be compared of the matched road in the map Ms-X4 is: LBdly1 (LXdly1, KXdly1, WZdly1, FXdly1, JLdly1);

LXdly 1, KXdly1, WZdly 1, FXdly1 and JLdly 1 sequentially represent the road-sign type, the credibility, the location, the direction and the distance from a road endpoint, respectively, of the road sign;

PPDdllb is the road-sign matching degree;

f(LXdld1, LXdly1) is a road-sign-type-similarity function, and its result is obtained by calculating by using LXdld1 and LXdly1;

f(KXdld1, KXdly1) is a credibility-similarity function, and its result is obtained by calculating by using KXdld1 and KXdly1;

f(WZdld1, WZdly1) is a location-similarity function, and its result is obtained by calculating by using WZdld1 and WZdly1;

f(FXdld1, FXdly1) is a direction-similarity function, and its result is obtained by calculating by using FXdld1 and FXdly1; and

f(JLdld1, JLdly1) is a distance-similarity function, and its result is obtained by calculating by using JLdld1 and JLdly1.

After the above road-sign-parameter-similarity results have been obtained, according to the above function formula of PPDdllb, the result of the road-sign matching degree is calculated.

After one road sign to be matched of the matched road in the map Ms-X4 has been determined, the road signs to be compared of the matched road in the map Ms-X4 are matched to it, to obtain a plurality of matching-degree results, and subsequently the road sign to be compared corresponding to the maximum value of the matching-degree results is selected as the matched road sign. Furthermore, the matching-degree result should not be less than a preset minimum value, and if it is less than the preset minimum value, then the matched road sign is abandoned; in other words, it is considered that a matched road sign cannot be found.

C3: according to data of matched road signs, calculating a road transformation matrix.

In some embodiments of the present disclosure, the road transformation matrix is calculated according to the locations and the maturities of the matched road signs.

The particular steps may include:

C3-1: according to a set of the road-sign points to be matched of the matched road in the map Ms-X4 and a set of the matched road-sign points of the matched road in the map Ms-X4, acquiring a total road-sign matching rotation angle that enables the two sets of road-sign points to be fitted.

The total road-sign matching rotation angle refers to the angle of rotation of the two sets of road-sign points toward each other for the purpose of enabling the two sets of road-sign points to be fitted. In some embodiments of the present disclosure, a required road transformation matrix that enables the two sets of road-sign points to reach the optimum fitting may be obtained according to an ICP (Iterative Closest Point) algorithm, wherein the road transformation matrix contains a road rotation matrix and road matching translational quantities, and by extracting the road rotation matrix, the total road-sign matching rotation angle may be calculated.

C3-2: according to the maturities of the two sets of road-sign points, calculating the road-sign matching rotation angle.

The maturity of a set of road-sign points refers to the sum of the maturities of all of the road-sign points in it.

The particular calculating method is:

$$Vk1+Vk2=Wa;$$

and

$$Q1*Vk2=Q2*Vk1;$$

Wherein,

Vk1 is the road-sign matching rotation angle of the rotation of the set of the road-sign points to be matched of the matched road in the map Ms-X4 toward the set of the matched road-sign points of the matched road;
Vk2 is the road-sign matching rotation angle of the rotation of the set of the matched road-sign points of the matched road in the map Ms-X4 toward the set of the matched road-sign points of the road to be matched;
Wa is the total road-sign matching rotation angle;
Q1 is the maturity of the set of the road-sign points to be matched of the matched road in the map Ms-X4; and
Q2 is the maturity of the set of the matched road-sign points of the matched road in the map Ms-X4.

C3-3: acquiring the location difference between the respective centroid points of the two sets of road-sign points as the total road-sign matching translational quantity, and, according to the total road-sign matching translational quantity, calculating the respective road-sign matching translational quantities of the two sets of road-sign points.

The centroid point of a set of road-sign points refers to the point of the mean value of the coordinates of all of the road-sign points in the set.

The respective road-sign matching translational quantities of the two sets of road-sign points may be calculated according to the following equations:

$$Tk1+Tk2=Tka;$$

and

$$Q1*Tk2=Q2*Tk1;$$

wherein

Tk1 is the road-sign matching translational quantity of the set of the road-sign points to be matched of the matched road in the map Ms-X4
Tk2 is the road-sign matching translational quantity of the set of the matched road-sign points of the matched road in the map Ms-X4;
Tka is the total road-sign matching translational quantity;
Q1 is the maturity of the set of the road-sign points to be matched of the matched road in the map Ms-X4; and
Q2 is the maturity of the set of the matched road-sign points of the matched road in the map Ms-X4.

C3-4: according to the road-sign matching rotation angles and the road-sign matching translational quantities, constructing the road transformation matrix.

For example, a particular road transformation matrix of the set of the road-sign points to be matched of the matched road in the map Ms-X4 may, for example, be:

$$Sk1 = \begin{bmatrix} \cos Vk1 & -\sin Vk1 & Tk1_x \\ \sin Vk1 & \cos Vk1 & Tk1_y \\ 0 & 0 & 1 \end{bmatrix}$$

wherein Vk1 is the road-sign matching rotation angle of the rotation of the set of the road-sign points to be matched of the matched road in the map Ms-X4 toward the set of the matched road-sign points of the matched road;

$Tk1_x$ represents the component in the x-axis of the road-sign matching translational quantity of the set of the road-sign points to be matched of the matched road in the map Ms-X4; and

$Tk1_y$ represents the component in the y-axis of the road-sign matching translational quantity of the set of the road-sign points to be matched of the matched road in the map Ms-X4.

A particular road transformation matrix of the set of the matched road-sign points of the matched road in the map Ms-X4 may, for example, be:

$$Sk2 = \begin{bmatrix} \cos Vk2 & -\sin Vk2 & Tk2_x \\ \sin Vk2 & \cos Vk2 & Tk2_y \\ 0 & 0 & 1 \end{bmatrix}$$

wherein Vk2 is the road-sign matching rotation angle of the rotation of the set of the matched road-sign points of the matched road in the map Ms-X4 toward the set of the matched road-sign points of the road to be matched;

$Tk2_x$ represents the component in the x-axis of the road-sign matching translational quantity of the set of the matched road-sign points of the matched road in the map Ms-X4; and

$Tk2_y$ represents the component in the y-axis of the road-sign matching translational quantity of the set of the matched road-sign points of the matched road in the map Ms-X4.

C4: according to the road transformation matrix, performing rotation and translation to the road map elements of the matched road.

The rotation and translation refer to multiplying the road transformation matrix by a position-pose matrix of the road map elements, to obtain a new pose matrix after the rotation and translation.

After the rotation and translation, new positions and poses of the road map elements can be obtained.

A particular transformation formula may, for example, be:

$$\begin{bmatrix} NewDLLoc_x \\ NewDLLoc_y \\ 1 \end{bmatrix} = Sk1 \cdot \begin{bmatrix} DLLoc_x \\ DLLoc_y \\ 1 \end{bmatrix} = \begin{bmatrix} \cos Vk1 & -\sin Vk1 & Tk1_x \\ \sin Vk1 & \cos Vk1 & Tk1_y \\ 0 & 0 & 1 \end{bmatrix} \cdot \begin{bmatrix} DLLoc_x \\ DLLoc_y \\ 1 \end{bmatrix}$$

wherein

$$\begin{bmatrix} NewDLLoc_x \\ NewDLLoc_y \\ 1 \end{bmatrix}$$

is the new pose matrix of the road signs after the rotation and translation;

Sk1 is the road transformation matrix of the set of the road-sign points to be matched of the matched road in the map Ms-X4, which may particularly be:

$$Sk1 = \begin{bmatrix} \cos Vk1 & -\sin Vk1 & Tk1_x \\ \sin Vk1 & \cos Vk1 & Tk1_y \\ 0 & 0 & 1 \end{bmatrix};$$

and

$$\begin{bmatrix} Loc_x \\ Loc_y \\ 1 \end{bmatrix}$$

is the pose matrix of the road signs before the rotation and translation.

In addition, it is further required to perform rotation and translation to the set of the matched road-sign points of the matched road in the map Ms-X4, the method of which is the same as the above method, and is not discussed further.

In an embodiment of the present disclosure, in order for brevity of description, after the road-sign matching transformation is performed, the map Ms-X4 is referred to as a map Ms-X5.

108: fusing characteristic data of respective matched road signs by using a weighted averaging method, and replacing characteristic data of a corresponding road sign in the map Ms-X5 by using the characteristic data of the road sign obtained after the fusion.

In an embodiment of the present disclosure, a matched road sign obtained after the intra-road transformation may, for example, be expressed as: NLBdld1 (NLXdld1, NKXdldl, NWZdld1, NFXdld1, NJLdld1);
wherein NLXdld1, NKXdldl, NWZdld1, NFXdld1 and NJLdld1 sequentially represent the road-sign type, the credibility, the location, the direction and the distance from a road endpoint, respectively, of the matched road sign.

The road sign being matched corresponding to the above matched road sign may be expressed as: NLBdly1 (NLXdly1, NKXdly1, NWZdly1, NFXdly1, NJLdly1);
wherein NLXdld1, NKXdldl, NWZdld1, NFXdld1 and NJLdld1 sequentially represent the road-sign type, the credibility, the location, the direction and the distance from a road endpoint, respectively, of the road sign being matched.

According to the characteristic data of the matched road sign and the road sign being matched, fusion is performed by using a weighted averaging method, which particularly comprises:

$$RHKX = \frac{NKXd1d * Q1 + NKXd1yl * Q2}{Q1 + Q2}$$

$$RHWZ = \frac{NWZd1d * Q1 + NWZd1yl * Q2}{Q1 + Q2}$$

$$RHFX = \frac{NFXd1d * Q1 + NFXd1yl * Q2}{Q1 + Q2}$$

$$RHJL = \frac{NJLd1d * Q1 + NJLd1yl * Q2}{Q1 + Q2}$$

wherein RHKX, RHWZ, RHFX and RHJL sequentially represent the credibility, the position, the direction and the distance from a road endpoint, respectively, after the fusion;
Q1 is the maturity of the matched road sign; and
Q2 is the maturity of the road sign being matched.

Besides the above fusion of the road-sign data, in this step, further, the updating time points of the road signs may also be fused, i.e., comparing the updating time points of the two road signs, and using the later updating time point of them as the updating time point.

This step further comprises replacing a corresponding characteristic data in the map Ms-X5 by using the characteristic data of the road sign obtained after the fusion, wherein the map Ms-X5 whose characteristic data of the road sign have been replaced is referred to as a map Ms-X6.

By using the above-described matching transformations and fusion of the intra-road road signs, the result of the map construction can be more accurate, and the same roads can be combined to obtain more accurate road data.

109: removing low-quality map elements.

In an embodiment of the present disclosure, the step of removing low-quality map elements may particularly comprise the following three sub-steps:

109A: determining whether a condition of starting up a step of removing low-quality map elements is satisfied.

Particularly, the condition may include but is not limited to at least one of the following conditions:

Condition A: a preset time interval is satisfied;
Condition B: the map Ms-X1 has been generated;
Condition C: the map Ms-X2 has been generated;
Condition D: the map Ms-X3 has been generated;
Condition E: the map Ms-X4 has been generated; and
Condition F: the map Ms-X5 has been generated.

Preferably, the condition may be that the map Ms-X5 has been generated, at which point the updating of the map is temporarily not required, which is more suitable for the removing of low-quality map elements.

109B: after it is determined that the condition of starting up the step of removing low-quality map elements is satisfied, determining whether qualities of the map elements satisfy the removing condition.

In an embodiment of the present disclosure, the particular mode of determining whether the qualities of the map elements satisfy the removing condition may include but is not limited to at least one of the following modes:

the mode A:
determining whether an updating duration of a target map element is greater than a first preset duration threshold, and if yes, considering that the target map element is a low-quality map element, and the removing condition is satisfied; and
the mode B:
determining whether an updating duration of a target map element is greater than a second preset duration threshold, and a maturity is less than a first maturity threshold, and if yes, considering that the target map element is a low-quality map element, and the removing condition is satisfied.

109C: removing low-quality map elements that satisfy the removing condition.

By using the above step of removal, some road data erroneously uploaded by a terminal or outdated road data can be removed, whereby the obtained map is more accurate.

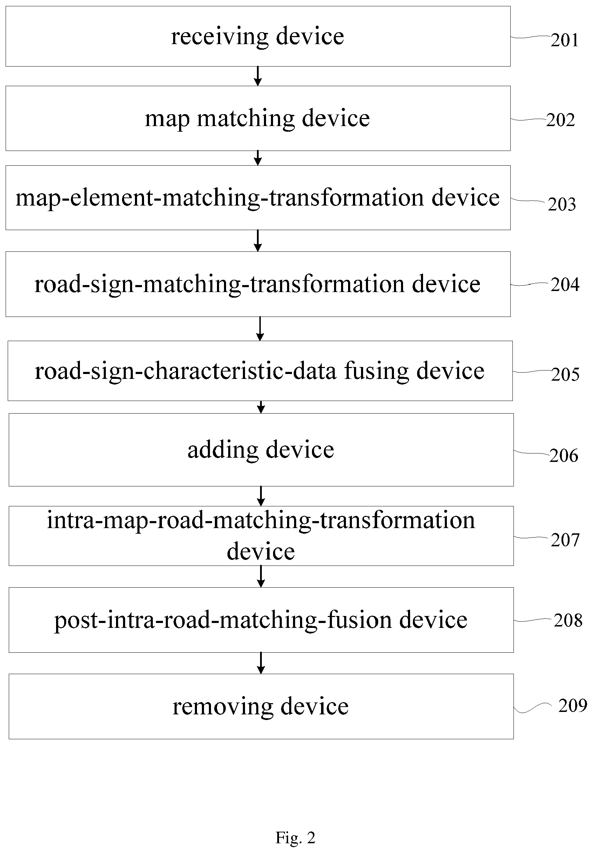

As shown in Fig. 2, the present disclosure further provides a map constructing system, wherein the system comprises:

a receiving device 201 configured for receiving an uploaded trajectory map to be matched Mvi.

In an embodiment of the present disclosure, the receiving device may be at a server. The server may particularly be a cloud, or a server having a certain computing power, or another particular form.

In an embodiment of the present disclosure, the trajectory map to be matched Mvi refers to a trajectory map uploaded by a vehicle or other terminals, and the matched trajectory map Ms refers to a trajectory map obtained in the server.

The system further comprises a map matching device 202 configured for searching for a matched trajectory map Ms that matches with the trajectory map to be matched Mvi.

Usually, the server, according to the identification data of the trajectory map to be matched Mvi, searches at the server for a matched trajectory map Ms that matches with the trajectory map to be matched Mvi. Furthermore, the particular searching process may comprise comparing the trajectory map in the server and the trajectory map to be matched Mvi, and determining that the trajectory map in the server and the trajectory map to be matched Mvi match with each other if they have the same or similar identification data.

The identification data of the trajectory map may, for example, be a certain datum of the trajectory map, for example, the entrance coordinate of the trajectory map.

The identification data of the trajectory map may also be multiple data of the trajectory map, for example, the entrance coordinate of the trajectory map and the exit coordinate of the trajectory map.

Regarding the case in which the identification data of the trajectory map are particularly the entrance coordinate of the trajectory map, at this point, the three-dimensional coordinates of the trajectory map in the server and the trajectory map to be matched may be compared, and if all of the difference values of the longitude coordinates, the latitude coordinates and the altitude coordinates are within preset upper limits, then it is considered that the trajectory map in the server and the trajectory map to be matched Mvi have similar identification data, and therefore the trajectory map in the server and the trajectory map to be matched Mvi match with each other.

In the same manner, regarding the case in which the identification data of the trajectory map are particularly multiple data of the trajectory map, for example, the multiple data may be the entrance coordinate of the trajectory map and the exit coordinate of the trajectory map, at this point, the three-dimensional coordinates of the entrances and the three-dimensional coordinates of the exits of the trajectory map in the server and the trajectory map to be matched may be compared individually, and if all of the difference values of the longitude coordinates, the latitude coordinates and the altitude coordinates of the entrances are within preset upper limits, and all of the difference values of the longitude coordinates, the latitude coordinates and the altitude coordinates of the exits are also within preset upper limits, then it is considered that the trajectory map in the server and the trajectory map to be matched Mvi have similar identification data, and therefore the trajectory map in the server and the trajectory map to be matched Mvi match.

Whether one datum or multiple data of the trajectory map are used as the identification data may be selected as two options/ However, in some instances, the two options may also be used together. For example, firstly one datum may be used as the identification data, and when a plurality of matched trajectory maps are found by using the one datum as the identification data, a plurality of data may be used again as the identification data to search for the mostly matched trajectory map.

The process of searching for the matched trajectory map Ms that matches with the trajectory map to be matched Mvi may comprise comparing all of the maps in the server with the trajectory map to be matched Mvi, and subsequently obtaining the mostly same or similar trajectory map as the matched trajectory map Ms.

The system further comprises a map-element-matching-transformation device 203 configured for performing map-element matching transformation between the trajectory map to be matched Mvi and the matched trajectory map Ms.

In an embodiment of the present disclosure, road-sign-data matching between the trajectory map to be matched Mvi and the matched trajectory map Ms is performed firstly, to acquire the matched road-sign data, and then a map transformation matrix is acquired, and then, according to the map transformation matrix, rotation and translation to the map elements are performed. That will be described particularly below.

The step of performing map-element matching transformation between the trajectory map to be matched Mvi and the matched trajectory map Ms particularly comprises:

A1: matching road-sign data.

In an embodiment of the present disclosure, the matching of road-sign data refers to selecting a road sign in the trajectory map to be matched Mvi, and subsequently finding a road sign the same as or similar to that from the matched trajectory map Ms.

Regarding the road sign in the trajectory map to be matched Mvi, in some embodiments of the present disclosure, all of the road signs in the trajectory map to be matched Mvi may be matched according to a predetermined sequence. In some other embodiments of the present disclosure, however, some of the road signs in the trajectory map to be matched Mvi may be matched according to a predetermined rule.

Regarding the road sign in the matched trajectory map Ms, in some embodiments of the present disclosure, after one road sign to be matched in one trajectory map to be matched Mvi has been selected, it is required to compare all of the road signs in the matched trajectory map Ms with the road sign to be matched, and, according to the comparison result, the mostly same or similar road sign is selected as the matched road sign. In some other embodiments of the present disclosure, it is also capable to compare some of the road signs in the matched trajectory map Ms with the road sign to be matched in the selected trajectory map to be matched Mvi, and then, according to the comparison result, the mostly same or similar road sign is selected as the matched road sign.

After one road sign to be matched of the trajectory map to be matched Mvi has been determined, the road signs to be compared of the matched trajectory map Ms are matched to it, to obtain a plurality of matching-degree results, and subsequently the road sign to be compared corresponding to the maximum value of the matching-degree results is selected as the matched road sign. Furthermore, the matching-degree result corresponding to the matched road sign should not be less than a preset minimum value, and if it is less than the preset minimum value, then the matched road sign is abandoned; in other words, it is considered that a matched road sign cannot be found.

After this step, for some or all of the road signs to be matched in the trajectory map to be matched Mvi, a matched road sign is found in the matched trajectory map Ms.

A2: according to data of matched road signs, calculating a map transformation matrix.

In some embodiments of the present disclosure, the map transformation matrix is calculated according to the locations and the maturities of the matched road signs.

A3: according to the map transformation matrix, performing rotation and translation to the map elements in the trajectory map to be matched Mvi and the matched trajectory map Ms.

The system further comprises a road-sign-matching-transformation device 204 configured for performing road-sign matching transformation between the trajectory map to be matched Mvi and the matched trajectory map Ms that are obtained after the map-element matching transformation.

In an embodiment of the present disclosure, in order for brevity of description, the trajectory map to be matched Mvi obtained after the map-element matching transformation is referred to as a map Mvi-X1, and the matched trajectory map Ms obtained after the map-element matching transformation is referred to as a map Ms-X1.

In an embodiment of the present disclosure, the method comprises firstly matching the road data and the road-sign data of the map Mvi-X1 and the map Ms-X1, to acquire the matched road data and road-sign data, then acquiring a road transformation matrix, and then performing rotation and translation to the map elements in the matched road according to the road transformation matrix. That will be described particularly below.

The step of performing road-sign matching transformation between the map Mvi-X1 and the map Ms-X1 particularly comprises:

B 1: matching road data;

B2: matching road signs contained in matched roads in the map Mvi-X1 and the map Ms-X1;

B3: according to data of matched road signs, calculating a road transformation matrix; and

B4: according to the road transformation matrix, performing rotation and translation to the map elements of a matched road in the map Mvi-X1 and the map elements of a matched road in the map Ms-X1.

In an embodiment of the present disclosure, in order for brevity of description, the map Mvi-X1 obtained after the road-sign matching transformation is referred to as a map Mvi-X2, and the map Ms-X1 obtained after the road-sign matching transformation is referred to as a map Ms-X2.

The system further comprises a road-sign-characteristic-data fusing device 205 configured for fusing characteristic data of road signs matched in the map Mvi-X2 and the map Ms-X2 by using a weighted averaging method, and replacing corresponding characteristic data in the map Ms-X2 by using the characteristic data of the road sign obtained after the fusion; and

replacing corresponding characteristic data in the map Ms-X2 by using the characteristic data of the road sign obtained after the fusion, wherein the map Ms-X2 whose characteristic data of the road sign have been replaced is referred to as a map Ms-X3.

Besides the above fusion of the road-sign data, in this step, further, the updating time points of the road signs may also be fused, i.e., comparing the updating time points of the two road signs, and using the later updating time point of them as the updating time point of the road sign obtained after the fusion. The updating time point is recorded, and the updating time point may be used as a parameter that is taken into consideration when road-sign removal is required, wherein the particular method of the road-sign removal will be described in the corresponding subsequent steps.

The system further comprises an adding device 206 configured for adding roads and road map elements in the map Mvi-X1 that are not able to be matched into the map Ms-X3.

After the above step of road-sign matching transformation, usually some of the roads in the map Mvi-X1 can find its matched road in the map Ms-X1, and some of the roads cannot find its matched road. Therefore, those roads and road map elements that cannot be matched will be added into the map Ms-X3 as part of the map Ms-X3, wherein the map Ms-X3 that has been added the roads and the road map elements is referred to as a map Ms-X4.

The system further comprises an intra-map-road-matching-transformation device 207 configured for, when the total maturity of the map elements of the map Ms-X4 is greater than a preset maturity threshold, performing intra-map road matching transformation.

As stated above, the maturity of the trajectory maps is increased by 1 after each one time of the matching, and, likewise, the maturity of each of the map elements in the trajectory maps is increased by 1 after each one time of the matching. The total maturity of the map elements in the trajectory map refers to the numerical value that is obtained by summing the maturities of all of the map elements in the trajectory map.

After the total maturity has reached a preset maturity threshold, intra-map road matching transformation will be performed, which particularly comprises the following steps:

C1: matching intra-map road data;

C2: matching road signs contained in a matched road;

C3: according to data of matched road signs, calculating a road transformation matrix; and

C4: according to the road transformation matrix, performing rotation and translation to the road map elements of the matched road.

In an embodiment of the present disclosure, in order for brevity of description, the map Ms-X4 obtained after the road-sign matching transformation is referred to as a map Ms-X5.

The system further comprises a post-intra-road-matching-fusion device 208 configured for fusing characteristic data of respective matched road signs by using a weighted averaging method, and replacing characteristic data of a corresponding road sign in the map Ms-X5 by using the characteristic data of the road sign obtained after the fusion.

Besides the above fusion of the road-sign data, in this step, further, the updating time points of the road signs may also be fused, i.e., comparing the updating time points of the two road signs, and using the later updating time point of them as the updating time point.

The device is further configured for replacing a corresponding characteristic data in the map Ms-X5 by using the characteristic data of the road sign obtained after the fusion, wherein the map Ms-X5 whose characteristic data of the road sign have been replaced is referred to as a map Ms-X6.

The system further comprises a removing device 209 configured for removing low-quality map elements.

In an embodiment of the present disclosure, the removing device may perform the removing by using the following modes:

209A: determining whether a condition of starting up a step of removing low-quality map elements is satisfied.

Particularly, the condition may include but is not limited to at least one of the following conditions:

Condition A: a preset time interval is satisfied;
Condition B: the map Ms-X1 has been generated;
Condition C: the map Ms-X2 has been generated;
Condition D: the map Ms-X3 has been generated;
Condition E: the map Ms-X4 has been generated; and
Condition F: the map Ms-X5 has been generated.

Preferably, the condition may be that the map Ms-X5 has been generated, at which point the updating of the map is temporarily not required, which is more suitable for the removing of low-quality map elements.

209B: after it is determined that the condition of starting up the step of removing low-quality map elements is satisfied, determining whether qualities of the map elements satisfy the removing condition.

In an embodiment of the present disclosure, the particular mode of determining whether the qualities of the map elements satisfy the removing condition may include but is not limited to at least one of the following modes:

the mode A:
determining whether an updating duration of a target map element is greater than a first preset duration threshold, and if yes, considering that the target map element is a low-quality map element, and the removing condition is satisfied; and
the mode B:
determining whether an updating duration of a target map element is greater than a second preset duration threshold, and a maturity is less than a first maturity threshold, and if yes, considering that the target map element is a low-quality map element, and the removing condition is satisfied.

209C: removing low-quality map elements that satisfy the removing condition.

An embodiment of the present disclosure further discloses a computer-readable storage medium, wherein the computer-readable storage medium stores a computer program, and the computer program causes a computer to implement the map constructing method according to any one of the embodiments of the present disclosure.

A person skilled in the art can understand that all or some of the steps of the methods according to the above embodiments may be implemented by relative hardware according to an instruction from a program, the program may be stored in a computer-readable storage medium, and the storage medium includes a Read-Only Memory (ROM), a Random Access Memory (RAM), a Programmable Read-only Memory (PROM), an Erasable Programmable Read Only Memory (EPROM), an One-time Programmable Read-Only Memory(OTPROM), an Electrically-Erasable Programmable Read-Only Memory (EEPROM), and a Compact Disc Read-Only Memory (CD-ROM), or another optical-disk storage, magnetic-disk storage, magnetic-tape storage, or any other computer-readable mediums that can be used to carry or store data.

The map constructing method and system and a storage medium according to the embodiments of the present disclosure have been described in detail above. The principle and the embodiments of the present disclosure are described herein with reference to the particular examples, and the description of the above embodiments is merely intended to facilitate to understand the method according to the present disclosure and its core concept. Moreover, for a person skilled in the art, according to the concept of the present disclosure, the particular embodiments and the range of application may be varied. In conclusion, the contents of the description should not be understood as limiting the present disclosure.

**Claims**

1. A map constructing method, **characterized in that** the method comprises:

   acquiring a trajectory map to be matched Mvi;
   searching for a matched trajectory map Ms that matches with the trajectory map to be matched Mvi;
   whereby the trajectory map to be matched Mvi refers to a trajectory map uploaded by a vehicle or other terminals, and the matched trajectory map Ms refers to a trajectory map pre-stored in a server;
   performing (103) map-element matching transformation between the trajectory map to be matched Mvi and the matched trajectory map Ms according to road-sign data, wherein the map element matching refers to selecting a road sign in the trajectory map to be matched Mvi, and subsequently finding a road sign same as or similar to the selected road sign from the matched trajectory map Ms, wherein after the map-element transformation, the trajectory map to be matched Mvi and the matched trajectory map Ms are referred to as a map Mvi-X1 and a map Ms-X1 respectively;
   performing (104) road-sign matching transformation between the map Mvi-X1 and the map Ms-X1 according to road data, wherein the performing road-sign matching transformation between the map Mvi-X1 and the map Ms-X1 comprises: matching (B1) road data; matching (B2) road signs contained in matched roads in the map Mvi-X1 and the map Ms-X1; according to data of matched road signs, calculating (B3) a road transformation matrix; and according to the road transformation matrix, performing (B4) rotation and translation to the map elements of a matched road in the map Mvi-X1 and the map elements of a matched road in the map Ms-X1, wherein the matching road data refers to selecting a road in the map Mvi-X1, and subsequently finding a road same as or similar to the selected road from the map Ms-X1, wherein after the road-sign matching transformation, the map Mvi-X1 and the map Ms-X1 are referred to as a map Mvi-X2 and a map Ms-X2 respectively;
   fusing (105) characteristic data of road signs matched in the map Mvi-X2 and the map Ms-X2 by using a weighted averaging method, and replacing corresponding characteristic data in the map Ms-X2 by using the characteristic data of the road sign obtained after the fusion, wherein the map Ms-X2 whose characteristic data of the road sign have been replaced is referred to as a map Ms-X3; and
   adding (106) roads and road map elements in the map Mvi-X1 that are not able to be matched into the map Ms-X3, wherein the map Ms-X3 with the added roads is referred to as a map Ms-X4.

2. The map constructing method according to claim 1, **characterized in that**, the method further comprises:

   determining (107) whether a total maturity of map elements of the map Ms-X4 is greater than a preset maturity threshold, the total maturity of the map elements of the map Ms-X4 refers to a numerical value that is obtained by summing the maturities of all of the map elements in the map Ms-X4, whereby the maturity of a map element is determined by the number of times it has been matched, and if yes, performing intra-map road matching transformation, the intra-map road matching transformation comprises matching intra-map road data, matching road signs contained in a matched road and according to data of matched road signs, calculating a first road transformation matrix, wherein after the intra-map road matching transformation, the map Ms-X4 is referred to as a map Ms-X5; and
   fusing (108) characteristic data of respective matched road signs by using a weighted averaging method, and replacing characteristic data of a corresponding road sign in the map Ms-X5 by using the characteristic data of the road sign obtained after the fusion, wherein the map Ms-X5 whose characteristic data of the road sign have been replaced is referred to as a map Ms-X6.

3. The map constructing method according to claim 2, **characterized in that**, the method further comprises:

   determining (109A) whether a condition of starting up a step of removing low-quality map elements is satisfied;
   if the map Ms-X5 has been generated, the condition is satisfied;
   after it is determined that the condition of starting up the step of removing low-quality map elements is satisfied, determining (109B) whether qualities of the map elements satisfy the removing condition comprises:

   determining whether an updating duration of a target map element is greater than a first preset duration threshold, and if yes, considering that the target map element is a low-quality map element, and the removing condition is satisfied;
   or,
   determining whether an updating duration of a target map element is greater than a second preset duration threshold, and a maturity is less than a first maturity threshold, and if yes, considering that the target map element is a low-quality map element, and the removing condition is satisfied; and
removing (109C) low-quality map elements that satisfy the removing condition.

4. The map constructing method according to claim 1, **characterized in that**,
the step of searching for the matched trajectory map Ms that matches with the trajectory map to be matched Mvi comprises:
according to identifying data of the trajectory map to be matched Mvi, searching for a matched trajectory map Ms that matches with the trajectory map to be matched Mvi; wherein if a trajectory map at a server Mvi has identifying data the same as or similar to the identifying data of the trajectory map to be matched Mvi, the trajectory map at the server Mvi and the trajectory map to be matched Mvi are considered as matched.

5. The map constructing method according to claim 1, **characterized in that**, the step of performing (103) map-element matching transformation between the trajectory map to be matched Mvi and the matched trajectory map Ms comprises:

matching (A1) road-sign data;
according to data of matched road signs, calculating (A2) a map transformation matrix; and
according to the map transformation matrix, performing (A3) rotation and translation to the map elements in the trajectory map to be matched Mvi and the matched trajectory map Ms.

6. The map constructing method according to claim 2, **characterized in that**, the step of determining (107) whether the total maturity of map elements of the map Ms-X4 is greater than the preset maturity threshold, and if yes, performing intra-map road matching transformation comprises:
according to the first road transformation matrix, performing rotation and translation to the road map elements of the matched road.

7. A map constructing system, **characterized in that** the system comprises:

a receiving device (201) configured for receiving an uploaded trajectory map to be matched Mvi;
a map matching device (202) configured for searching for a matched trajectory map Ms that matches with the trajectory map to be matched Mvi;
whereby the trajectory map to be matched Mvi refers to a trajectory map uploaded by a vehicle or other terminals, and the matched trajectory map Ms refers to a trajectory map pre-stored in a server;
a map-element-matching-transformation device (203) configured for performing map-element matching transformation between the trajectory map to be matched Mvi and the matched trajectory map Ms according to road-sign data, wherein the map element matching refers to selecting a road sign in the trajectory map to be matched Mvi, and subsequently finding a road sign same as or similar to the selected road sign from the matched trajectory map Ms, wherein after the map-element transformation, the trajectory map to be matched Mvi and the matched trajectory map Ms are referred to as a map Mvi-X1 and a map Ms-X1 respectively;
a road-sign-matching-transformation device (204) configured for performing road-sign matching transformation between the map Mvi-X1 and the map Ms-X1 according to road data, the operation of performing road-sign matching transformation between the map Mvi-X1 and the map Ms-X1 comprises: matching road data; matching road signs contained in matched roads in the map Mvi-X1 and the map Ms-X1; according to data of matched road signs, calculating (B3) a road transformation matrix; and according to the road transformation matrix, performing (B4) rotation and translation to the map elements of a matched road in the map Mvi-X1 and the map elements of a matched road in the map Ms-X1, wherein the matching road data refers to selecting a road in the map Mvi-X1, and subsequently finding a road same as or similar to the selected road from the map Ms-X1, wherein after the road-sign matching transformation, the map Mvi-X1 and the map Ms-X1 are referred to as a map Mvi-X2 and a map Ms-X2 respectively;
a road-sign-characteristic-data fusing device (205) configured for fusing characteristic data of road signs matched in the map Mvi-X2 and the map Ms-X2 by using a weighted averaging method, and replacing corresponding characteristic data in the map Ms-X2 by using the characteristic data of the road sign obtained after the fusion, wherein the map Ms-X2 whose characteristic data of the road sign have been replaced is referred to as a map Ms-X3; and
an adding device (206) configured for adding roads and road map elements in the map Mvi-X1 that are not able to be matched into the map Ms-X3, wherein the map with the added roads is referred to as Ms-X4.

8. The map constructing system according to claim 7, **characterized in that**, the system further comprises:

an intra-map-road-matching-transformation device (207) configured for determining whether a total maturity of map elements of the map Ms-X4 is greater than a preset maturity threshold, the total maturity of the map elements of the map Ms-X4 refers to a numerical value that is obtained by summing the maturities of all of the map elements in the map Ms-X4, whereby the maturity of a map element is determined by the number of times it has been matched, and if yes, performing intra-map road matching transformation, the intra-map road matching transformation comprises matching intra-map road data, matching road signs contained in a matched road and according to data of matched road signs, calculating a first road transformation matrix, wherein after the intra-map road matching transformation, the map Ms-X4 is referred to as a map Ms-X5; and

a post-intra-road-matching-fusion device (208) configured for fusing characteristic data of respective matched road signs by using a weighted averaging method, and replacing characteristic data of a corresponding road sign in the map Ms-X5 by using the characteristic data of the road sign obtained after the fusion, wherein the map Ms-X5 whose characteristic data of the road sign have been replaced is referred to as a map Ms-X6.

9. The map constructing system according to claim 8, **characterized in that**, the system further comprises a removing device (209), the removing device (209) is configured for:

determining whether a condition of starting up a step of removing low-quality map elements is satisfied; if the map Ms-X5 has been generated, the condition is satisfied;

after it is determined that the condition of starting up the step of removing low-quality map elements is satisfied, determining whether qualities of the map elements satisfy the removing condition comprises:

determining whether an updating duration of a target map element is greater than a first preset duration threshold, and if yes, considering that the target map element is a low-quality map element, and the removing condition is satisfied;

or,

determining whether an updating duration of a target map element is greater than a second preset duration threshold, and a maturity is less than a first maturity threshold, and if yes, considering that the target map element is a low-quality map element, and the removing condition is satisfied; and

removing low-quality map elements that satisfy the removing condition.

10. The map constructing system according to claim 7, **characterized in that**, the operation of searching for the matched trajectory map Ms that matches with the trajectory map to be matched Mvi comprises:

according to identifying data of the trajectory map to be matched Mvi, searching for a matched trajectory map Ms that matches with the trajectory map to be matched Mvi; wherein if a trajectory map at a server Mvi has identifying data the same as or similar to the identifying data of the trajectory map to be matched Mvi, the trajectory map at the server Mvi and the trajectory map to be matched Mvi are considered as matched.

11. The map constructing system according to claim 7, **characterized in that**, the operation of performing map-element matching transformation between the trajectory map to be matched Mvi and the matched trajectory map Ms comprises:

matching road-sign data;

according to data of matched road signs, calculating a map transformation matrix; and

according to the map transformation matrix, performing rotation and translation to the map elements in the trajectory map to be matched Mvi and the matched trajectory map Ms.

12. A computer-readable storage medium, **characterized in that** the computer-readable storage medium stores a computer program, and the computer program causes a computer to implement the map constructing method according to any one of claims 1 to 6.

**Patentansprüche**

1. Kartenerstellungsverfahren, **dadurch gekennzeichnet, dass** das Verfahren umfasst:

Erfassen einer abzugleichenden Streckenkarte Mvi;

Suchen nach einer abgeglichenen Streckenkarte Ms, die mit der abzugleichenden Streckenkarte Mvi übereinstimmt;

wobei sich die abzugleichende Streckenkarte Mvi auf eine Streckenkarte bezieht, die von einem Fahrzeug oder anderen Endgeräten hochgeladen wurde, und die abgeglichene Streckenkarte Ms sich auf eine Streckenkarte bezieht, die auf einem Server vorgespeichert ist;

Durchführen (103) einer Kartenelement-Abgleichungstransformation zwischen der abzugleichenden Streckenkarte Mvi und der abgeglichenen Streckenkarte Ms gemäß Straßenschilddaten, wobei sich die Kartenelement-Abgleichung auf ein Auswählen eines Straßenschildes in der abzugleichenden Streckenkarte Mvi bezieht, und anschließend Finden eines Straßenschildes, das mit dem ausgewählten Straßenschild identisch oder ihm ähnlich ist, aus der abgeglichenen Streckenkarte Ms, wobei nach der Kartenelementtransformation die abzugleichende Streckenkarte Mvi und die abgeglichene Streckenkarte Ms als eine Karte Mvi-X1 bzw. eine Karte Ms-X1 bezeichnet werden;

Durchführen (104) einer Straßenschilder-Abgleichungstransformation zwischen der Karte Mvi-X1 und der Karte Ms-X1 gemäß Straßendaten, wobei das Durchführen der Straßenschilder-Abgleichungstransformation zwischen der Karte Mvi-X1 und der Karte Ms-X1 umfasst: Abgleichen (B1) von Straßendaten; Abgleichen (B2) von Straßenschildern, die in abgeglichenen Straßen in der Karte Mvi-X1 und der Karte Ms-X1 enthalten sind; gemäß Daten der abgeglichenen Straßenschilder Berechnen (B3) einer Straßentransformationsmatrix; und gemäß der Straßentransformationsmatrix Durchführen (B4) von Rotation und Translation an den Kartenelementen einer abgeglichenen Straße in der Karte Mvi-X1 und den Kartenelementen einer abgeglichenen Straße in der Karte Ms-X1, wobei sich das Abgleichen von Straßendaten auf ein Auswählen einer Straße in der Karte Mvi-X1 und anschließend Finden einer Straße aus der Karte Ms-X1, die mit der ausgewählten Straße identisch oder ihr ähnlich ist, bezieht, wobei die Karte Mvi-X1 und die Karte Ms-X1 nach der Straßenschilder-Abgleichungstransformation als Karte Mvi-X2 bzw. Karte Ms-X2 bezeichnet werden;

Verschmelzen (105) von Kenndaten von Straßenschildern, die in der Karte Mvi-X2 und der Karte Ms-X2 abgeglichen sind, unter Verwendung eines Verfahrens zur gewichteten Mittelwertbildung, und Ersetzen entsprechender Kenndaten in der Karte Ms-X2 unter Verwendung der Kenndaten des Straßenschilds, die nach der Verschmelzung erhalten wurden, wobei die Karte Ms-X2, deren Kenndaten des Straßenschilds ersetzt wurden, als Karte Ms-X3 bezeichnet wird; und

Hinzufügen (106) von Straßen und Straßenkartenelementen in der Karte Mvi-X1, die nicht mit der Karte Ms-X3 abgeglichen werden können,

wobei die Karte Ms-X3 mit den hinzugefügten Straßen als Karte Ms-X4 bezeichnet wird.

2. Kartenerstellungsverfahren nach Anspruch 1, **dadurch gekennzeichnet, dass** das Verfahren ferner umfasst:

Bestimmen (107), ob ein Gesamtreifegrad von Kartenelementen der Karte Ms-X4 größer ist als ein voreingestellter Reifegrad-Schwellenwert, wobei sich der Gesamtreifegrad der Kartenelemente der Karte Ms-X4 auf einen numerischen Wert bezieht, der durch Aufsummieren der Reifegrade aller Kartenelemente in der Karte Ms-X4 erhalten wird, wobei der Reifegrad eines Kartenelements durch die Anzahl der Male bestimmt wird, die es abgeglichen wurde, und, falls ja, Durchführen einer karteninternen Straßenabgleichungstransformation, wobei die karteninterne Straßenabgleichungstransformation ein Abgleichen von karteninternen Straßendaten, ein Abgleichen von Straßenschildern, die in einer abgeglichenen Straße enthalten sind, und gemäß Daten von abgeglichenen Straßenschildern, ein Berechnen einer ersten Straßentransformationsmatrix umfasst, wobei nach der karteninternen Straßenabgleichungstransformation die Karte Ms-X4 als Karte Ms-X5 bezeichnet wird; und

Verschmelzen (108) von Kenndaten von jeweils abgeglichenen Straßenschildern unter Verwendung eines Verfahrens zur gewichteten Mittelwertbildung und Ersetzen von Kenndaten eines entsprechenden Straßenschilds in der Karte Ms-X5 unter Verwendung der Kenndaten des Straßenschilds, die nach der Verschmelzung erhalten wurden, wobei die Karte Ms-X5, deren Kenndaten des Straßenschilds ersetzt wurden, als eine Karte Ms-X6 bezeichnet wird.

3. Kartenerstellungsverfahren nach Anspruch 2, **dadurch gekennzeichnet, dass** das Verfahren ferner umfasst:

Bestimmen (109A), ob eine Bedingung zum Starten eines Schritts zum Entfernen von Kartenelementen geringer Qualität erfüllt ist; wobei, wenn die Karte Ms-X5 erzeugt worden ist, die Bedingung erfüllt ist;

nachdem festgestellt wurde, dass die Bedingung zum Starten des Schritts zum Entfernen von Kartenelementen geringer Qualität erfüllt ist, Bestimmen (109B), ob die Qualitäten der Kartenelemente die Entfernungsbedingung erfüllen, umfassend: Bestimmen, ob die Aktualisierungsdauer eines Ziel-Kartenelements größer ist als ein erster voreingestellter Dauer-Schwellenwert, und wenn ja, Berücksichtigen, dass das Ziel-Kartenelement ein Kartenelement geringer Qualität ist und die Entfernungsbedingung erfüllt ist;

oder

Bestimmen, ob die Aktualisierungsdauer eines Ziel-Kartenelements größer ist als ein zweiter voreingestellter Dauer-Schwellenwert und ein Reifegrad kleiner ist als einen erster Reifegrad-Schwellenwert, und wenn ja, Berücksichtigen, dass das Ziel-Kartenelement ein Kartenelement geringer Qualität ist und die Entfernungsbedingung erfüllt ist; und

Entfernen (109C) von Kartenelementen geringer Qualität, die die Entfernungsbedingung erfüllen.

4. Kartenerstellungsverfahren nach Anspruch 1, **dadurch gekennzeichnet, dass** der Schritt zum Suchen nach der abgeglichenen Streckenkarte Ms, die mit der abzugleichenden Streckenkarte Mvi übereinstimmt, umfasst:

gemäß Identifizierungsdaten der abzugleichenden Streckenkarte Mvi Suchen nach einer abgeglichenen Streckenkarte Ms, die mit der abzugleichenden Streckenkarte Mvi übereinstimmt; wobei, wenn eine auf einem Server befindliche Streckenkarte Mvi Identifizierungsdaten aufweist, die mit den Identifizierungsdaten der abzugleichenden Streckenkarte Mvi identisch oder ähnlich sind, die auf dem Server befindliche Streckenkarte Mvi und die abzugleichende Streckenkarte Mvi als abgeglichen betrachtet werden.

5. Kartenerstellungsverfahren nach Anspruch 1, **dadurch gekennzeichnet, dass** der Schritt zum Durchführen (103) der Kartenelement-Abgleichungstransformation zwischen der abzugleichenden Streckenkarte Mvi und der abgeglichenen Streckenkarte Ms umfasst:

Abgleichen (A1) von Straßenschilddaten;
gemäß Daten abgeglichener Straßenschilder Berechnen (A2) einer Kartentransformationsmatrix; und
gemäß der Kartentransformationsmatrix Durchführen (A3) von Rotation und Translation an den Kartenelementen in der abzugleichenden Streckenkarte Mvi und der abgeglichenen Streckenkarte Ms.

6. Kartenerstellungsverfahren nach Anspruch 2, **dadurch gekennzeichnet, dass** der Schritt zum Bestimmen (107), ob der Gesamtreifegrad der Kartenelemente der Karte Ms-X4 größer ist als der voreingestellte Reifegrad-Schwellenwert, und wenn ja, Durchführen einer karteninternen Straßenabgleichungstransformation, umfasst:
gemäß der ersten Straßentransformationsmatrix Durchführen von Rotation und Translation an den Straßenkartenelementen der abgeglichenen Straße.

7. Kartenerstellungssystem, **dadurch gekennzeichnet, dass** das System umfasst:

eine Empfangsvorrichtung (201), die eingerichtet ist, um eine hochgeladene, abzugleichende Streckenkarte Mvi zu empfangen;
eine Kartenabgleichungsvorrichtung (202), die eingerichtet ist, um nach einer abgeglichenen Streckenkarte Ms zu suchen, die mit der abzugleichenden Streckenkarte Mvi übereinstimmt; wobei sich die abzugleichende Streckenkarte Mvi auf eine Streckenkarte bezieht, die von einem Fahrzeug oder anderen Endgeräten hochgeladen wurde, und die abgeglichene Streckenkarte Ms sich auf eine Streckenkarte bezieht, die auf einem Server vorgespeichert ist;
eine Kartenelement-Abgleichungstransformationsvorrichtung (203), die eingerichtet ist, um eine Kartenelement-Abgleichungstransformation zwischen der abzugleichenden Streckenkarte Mvi und der abgeglichenen Streckenkarte Ms gemäß Straßenschilddaten durchzuführen, wobei sich die Kartenelement-Abgleichung auf ein Auswählen eines Straßenschildes in der abzugleichenden Streckenkarte Mvi bezieht, und um anschließend ein Straßenschild zu finden, das mit dem ausgewählten Straßenschild identisch oder ihm ähnlich ist, aus der abgeglichenen Streckenkarte Ms, wobei nach der Kartenelementtransformation die abzugleichende Streckenkarte Mvi und die abgeglichene Streckenkarte Ms als eine Karte Mvi-X1 bzw. eine Karte Ms-X1 bezeichnet werden;
eine Straßenschilder-Abgleichungstransformationsvorrichtung (204), die eingerichtet ist, um eine Straßenschilder-Abgleichungstransformation zwischen der Karte Mvi-X1 und der Karte Ms-X1 gemäß Straßendaten durchzuführen, wobei der Vorgang zum Durchführen der Straßenschilder-Abgleichungstransformation zwischen der Karte Mvi-X1 und der Karte Ms-X1 umfasst: Abgleichen von Straßendaten; Abgleichen von Straßenschildern, die in abgeglichenen Straßen in der Karte Mvi-X1 und der Karte Ms-X1 enthalten sind; Berechnen (B3) einer Straßentransformationsmatrix gemäß den Daten der abgeglichenen Straßenschilder; und gemäß der Straßentransformationsmatrix Durchführen (B4) von Rotation und Translation an den Kartenelementen einer abgeglichenen Straße in der Karte Mvi-X1 und den Kartenelementen einer abgeglichenen Straße in der Karte Ms-X1, wobei sich das Abgleichen von Straßendaten auf ein Auswählen einer Straße in der Karte Mvi-X1 beziehen, und anschließend Finden einer Straße aus der Karte Ms-X1, die mit der ausgewählten Straße identisch oder ihr ähnlich ist, wobei die Karte Mvi-X1 und die Karte Ms-X1 nach der Straßenschilder-Abgleichungstansformation als Karte Mvi-X2 bzw. Karte Ms-X2 bezeichnet werden;

eine Straßenschilder-Kenndaten-Verschmelzungsvorrichtung (205), die eingerichtet ist, um Kenndaten von Straßenschildern zu verschmelzen, die in der Karte Mvi-X2 und der Karte Ms-X2 abgeglichen sind, unter Verwendung eines Verfahrens zur gewichteten Mittelwertbildung, und um entsprechende Kenndaten in der Karte Ms-X2 unter Verwendung der Kenndaten des Straßenschilds zu ersetzen, die nach der Verschmelzung erhalten wurden, wobei die Karte Ms-X2, deren Kenndaten des Straßenschilds ersetzt wurden, als Karte Ms-X3 bezeichnet wird; und

eine Hinzufügungsvorrichtung (206), die eingerichtet ist, um Straßen und Straßenkartenelementen in der Karte Mvi-X1 hinzuzufügen, die nicht mit der Karte Ms-X3 abgeglichen werden können, wobei die Karte mit den hinzugefügten Straßen als Ms-X4 bezeichnet wird.

8. Kartenerstellungssystem nach Anspruch 7, **dadurch gekennzeichnet, dass** das System ferner umfasst:

eine Karteninterne-Straßen-Abgleichungstransformationsvorrichtung (207), die eingerichtet ist, um zu bestimmen, ob ein Gesamtreifegrad von Kartenelementen der Karte Ms-X4 größer ist als ein voreingestellter Reifegrad-Schwellenwert, wobei sich der Gesamtreifegrad der Kartenelemente der Karte Ms-X4 auf einen numerischen Wert bezieht, der durch Aufsummieren der Reifegrade aller Kartenelemente in der Karte Ms-X4 erhalten wird, wobei der Reifegrad eines Kartenelements durch die Anzahl der Male bestimmt wird, die es abgeglichen wurde, und, falls ja, eine karteninternen Straßenabgleichungstransformation durchzuführen, wobei die karteninterne Straßenabgleichungstransformation ein Abgleichen von karteninternen Straßendaten, ein Abgleichen von Straßenschildern, die in einer abgeglichenen Straße enthalten sind, und gemäß Daten von abgeglichenen Straßenschildern, ein Berechnen einer ersten Straßentransformationsmatrix umfasst, wobei nach der karteninternen Straßenabgleichungstransformation die Karte Ms-X4 als Karte Ms-X5 bezeichnet wird; und

eine Nach-Karteninterne-Straßen-Abgleichungsverschmelzungsvorrichtung (208), die eingerichtet ist, um Kenndaten von jeweiligen abgeglichenen Straßenschildern unter Verwendung eines Verfahrens zur gewichteten Mittelwertbildung zu verschmelzen, und um Kenndaten eines entsprechenden Straßenschildes in der Karte Ms-X5 unter Verwendung der Kenndaten des Straßenschildes, die nach der Verschmelzung erhalten wurden, in der Karte Ms-X5 zu ersetzen, wobei die Karte Ms-X5, deren Kenndaten des Straßenschildes ersetzt wurden, als eine Karte Ms-X6 bezeichnet wird.

9. Kartenerstellungssystem nach Anspruch 8, **dadurch gekennzeichnet, dass** das System ferner eine Entfernungsvorrichtung (209) umfasst, wobei die Entfernungsvorrichtung (209) eingerichtet ist zum:

Bestimmen, ob eine Bedingung zum Starten eines Schritts zum Entfernen von Kartenelementen geringer Qualität erfüllt ist;

wobei, wenn die Karte Ms-X5 erzeugt worden ist, die Bedingung erfüllt ist;

nachdem festgestellt wurde, dass die Bedingung zum Starten des Schritts zum Entfernen von Kartenelementen geringer Qualität erfüllt ist, Bestimmen, ob die Qualitäten der Kartenelemente die Entfernungsbedingung erfüllen, umfassend: Bestimmen, ob die Aktualisierungsdauer eines Ziel-Kartenelements größer ist als ein erster voreingestellter Dauer-Schwellenwert, und wenn ja, Berücksichtigen, dass das Ziel-Kartenelement ein Kartenelement geringer Qualität ist und die Entfernungsbedingung erfüllt ist;

oder

Bestimmen, ob die Aktualisierungsdauer eines Ziel-Kartenelements größer ist als ein zweiter voreingestellter Dauer-Schwellenwert und ein Reifegrad kleiner ist als einen erster Reifegrad-Schwellenwert, und wenn ja, Berücksichtigen, dass das Ziel-Kartenelement ein Kartenelement geringer Qualität ist und die Entfernungsbedingung erfüllt ist; und

Entfernen von Kartenelementen geringer Qualität, die die Entfernungsbedingung erfüllen.

10. Kartenerstellungssystem nach Anspruch 7, **dadurch gekennzeichnet, dass** der Vorgang zum Suchen nach der abgeglichenen Streckenkarte Ms, die mit der abzugleichenden Streckenkarte Mvi übereinstimmt, umfasst:

gemäß Identifizierungsdaten der abzugleichenden Streckenkarte Mvi Suchen nach einer abgeglichenen Streckenkarte Ms, die mit der abzugleichenden Streckenkarte Mvi übereinstimmt; wobei, wenn eine auf einem Server befindliche Streckenkarte Mvi Identifizierungsdaten aufweist, die mit den Identifizierungsdaten der abzugleichenden Streckenkarte Mvi identisch oder ähnlich sind, die auf dem Server befindliche Streckenkarte Mvi und die abzugleichende Streckenkarte Mvi als abgeglichen betrachtet werden.

11. Kartenerstellungssystem nach Anspruch 7, **dadurch gekennzeichnet, dass** der Vorgang zum Durchführen der Kartenelement-Abgleichungstransformation zwischen der abzugleichenden Streckenkarte Mvi und der abgeglichenen Streckenkarte Ms umfasst:

Abgleichen von Straßenschilddaten;
gemäß Daten abgeglichener Straßenschilder Berechnen einer Kartentransformationsmatrix; und
gemäß der Kartentransformationsmatrix Durchführen von Rotation und Translation an den Kartenelementen in der abzugleichenden Streckenkarte Mvi und der abgeglichenen Streckenkarte Ms.

12. Computerlesbares Speichermedium, **dadurch gekennzeichnet, dass** das computerlesbare Speichermedium ein Computerprogramm speichert und das Computerprogramm einen Computer dazu veranlasst, das Kartenerstellungsverfahren nach einem der Ansprüche 1 bis 6 zu implementieren.


**Revendications**

1. Procédé de construction de carte, **caractérisé en ce que** le procédé comprend les étapes consistant à :

acquérir une carte de trajectoire à mettre en correspondance Mvi ;
rechercher une carte de trajectoire mise en correspondance Ms qui correspond à la carte de trajectoire à mettre en correspondance Mvi ;
dans lequel la carte de trajectoire à mettre en correspondance Mvi fait référence à une carte de trajectoire téléchargée par un véhicule ou d'autres terminaux, et la carte de trajectoire mise en correspondance Ms fait référence à une carte de trajectoire préenregistrée dans un serveur ;
effectuer (103) une transformation de mise en correspondance d'éléments cartographiques entre la carte de trajectoire à mettre en correspondance Mvi et la carte de trajectoire mise en correspondance Ms en fonction de données de signalisation routière, dans lequel la mise en correspondance d'éléments cartographiques consiste à sélectionner une signalisation routière dans la carte de trajectoire à mettre en correspondance Mvi et à trouver ensuite une signalisation routière identique ou similaire à la signalisation routière sélectionnée dans la carte de trajectoire mise en correspondance Ms, dans lequel, après la transformation d'éléments cartographiques, la carte de trajectoire à mettre en correspondance Mvi et la carte de trajectoire mise en correspondance Ms sont appelées respectivement carte Mvi-X1 et carte Ms-X1 ;
effectuer (104) une transformation de mise en correspondance de signalisations routières entre la carte Mvi-X1 et la carte Ms-X1 en fonction de données routières, dans lequel la transformation de mise en correspondance de signalisations routières entre la carte Mvi-X1 et la carte Ms-X1 comprend les étapes consistant à : mettre en correspondance (B1) les données routières ; mettre en correspondance (B2) les signalisations routières contenues dans les routes mises en correspondance dans la carte Mvi-X1 et la carte Ms-X1 ; en fonction des données des signalisations routières mises en correspondance, calculer (B3) une matrice de transformation de route ; et en fonction de la matrice de transformation de route, effectuer (B4) une rotation et une translation des éléments cartographiques d'une route mise en correspondance dans la carte Mvi-X1 et des éléments cartographiques d'une route mise en correspondance dans la carte Ms-X1, dans lequel les données de route mise en correspondance font référence à la sélection d'une route dans la carte Mvi-X1 et à la recherche subséquente d'une route identique ou similaire à la route sélectionnée dans la carte Ms-X1, dans lequel, après la transformation de mise en correspondance de signalisations routières, la carte Mvi-X1 et la carte Ms-X1 sont appelées respectivement carte Mvi-X2 et carte Ms-X2 ;
fusionner (105) les données caractéristiques des signalisations routières mises en correspondance dans la carte Mvi-X2 et la carte Ms-X2 en utilisant une méthode de moyenne pondérée, et remplacer les données caractéristiques correspondantes dans la carte Ms-X2 en utilisant les données caractéristiques de la signalisation routière obtenues après la fusion, dans lequel la carte Ms-X2 dont les données caractéristiques de la signalisation routière ont été remplacées est appelée carte Ms-X3 ; et
ajouter (106) des routes et éléments cartographiques de route dans la carte Mvi-X1 qui ne peuvent pas être mis en correspondance dans la carte Ms-X3, dans lequel la carte Ms-X3 avec les routes ajoutées est appelée carte Ms-X4.

2. Procédé de construction de carte selon la revendication 1, **caractérisé en ce que** le procédé comprend en outre les étapes consistant à :

déterminer (107) si une maturité totale des éléments cartographiques de la carte Ms-X4 est supérieure à un seuil de maturité prédéfini, la maturité totale des éléments cartographiques de la carte Ms-X4 faisant référence à une valeur numérique obtenue en additionnant les maturités de tous les éléments cartographiques de la carte Ms-X4, la maturité d'un élément cartographique étant déterminée par le nombre de fois où il a été mis en correspondance, et, dans l'affirmative, effectuer une transformation de mise en correspondance de route intra-carte, la transformation de mise en correspondance de route intra-carte consistant à mettre en correspondance des données de route intra-carte, mettre en correspondance des signalisations routières contenues dans une route mise en correspondance et, en fonction des données des signalisations routières mises en correspondance, calculer une première matrice de transformation de route, dans lequel, après la transformation de mise en correspondance de route intra-carte, la carte Ms-X4 est appelée carte Ms-X5 ; et

fusionner (108) les données caractéristiques des signalisations routières mises en correspondance respectives en utilisant une méthode de moyenne pondérée, et remplacer les données caractéristiques d'une signalisation routière correspondante dans la carte Ms-X5 en utilisant les données caractéristiques de la signalisation routière obtenues après la fusion, dans lequel la carte Ms-X5 dont les données caractéristiques de la signalisation routière ont été remplacées est appelée carte Ms-X6.

3.  Procédé de construction de carte selon la revendication 2, **caractérisé en ce que** le procédé comprend en outre les étapes consistant à :

déterminer (109A) si une condition de démarrage d'une étape de suppression des éléments cartographiques de faible qualité est satisfaite ; lorsque la carte Ms-X5 a été générée, la condition est satisfaite ;

après qu'il a été déterminé que la condition de démarrage de l'étape de suppression des éléments cartographiques de faible qualité est satisfaite, déterminer (109B) si les qualités des éléments cartographiques satisfont à la condition de suppression consiste à :

déterminer si une durée de mise à jour d'un élément cartographique cible est supérieure à un premier seuil de durée prédéfini et, dans l'affirmative, considérer que l'élément cartographique cible est un élément cartographique de faible qualité et que la condition de suppression est satisfaite ;

ou

déterminer si une durée de mise à jour d'un élément cartographique cible est supérieure à un second seuil de durée prédéfini et si une maturité est inférieure à un premier seuil de maturité et, dans l'affirmative, considérer que l'élément cartographique cible est un élément cartographique de faible qualité et que la condition de suppression est satisfaite ;

et

supprimer (109C) les éléments cartographiques de faible qualité qui satisfont la condition de suppression.

4.  Procédé de construction de carte selon la revendication 1, **caractérisé en ce que**
l'étape consistant à rechercher la carte de trajectoire mise en correspondance Ms qui correspond à la carte de trajectoire à mettre en correspondance Mvi consiste à :

en fonction de données d'identification de la carte de trajectoire à mettre en correspondance Mvi, rechercher une carte de trajectoire mise en correspondance Ms qui correspond à la carte de trajectoire à mettre en correspondance Mvi ;

dans lequel, lorsqu'une carte de trajectoire sur un serveur Mvi a des données d'identification identiques ou similaires aux données d'identification de la carte de trajectoire à mettre en correspondance Mvi, la carte de trajectoire sur le serveur Mvi et la carte de trajectoire à mettre en correspondance Mvi sont considérées comme étant mises en correspondance.

5.  Procédé de construction de carte selon la revendication 1, **caractérisé en ce que** l'étape consistant à effectuer (103) une transformation de mise en correspondance d'éléments cartographiques entre la carte de trajectoire à mettre en correspondance Mvi et la carte de trajectoire mise en correspondance Ms consiste à :

mettre en correspondance (A1) des données de signalisation routière ;

en fonction des données de signalisation routière mises en correspondance, calculer (A2) une matrice de transformation de carte ; et

en fonction de la matrice de transformation de carte, effectuer (A3) une rotation et une translation des éléments cartographiques dans la carte de trajectoire à mettre en correspondance Mvi et la carte de trajectoire mise en correspondance Ms.

6.  Procédé de construction de carte selon la revendication 2, **caractérisé en ce que** l'étape consistant à déterminer (107) si la maturité totale des éléments cartographiques de la carte Ms-X4 est supérieure au seuil de maturité prédéfini et, dans l'affirmative, à effectuer une transformation de mise en correspondance de route intra-carte, consiste à :

en fonction de la première matrice de transformation de route, effectuer une rotation et une translation sur les éléments cartographiques de route de la route mise en correspondance.

**7.** Système de construction de carte, **caractérisé en ce que** le système comprend :

un dispositif de réception (201) configuré pour recevoir une carte de trajectoire téléchargée à mettre en correspondance Mvi ;

un dispositif de mise en correspondance de cartes (202) configuré pour rechercher une carte de trajectoire mise en correspondance Ms qui correspond à la carte de trajectoire à mettre en correspondance Mvi ;

la carte de trajectoire à mettre en correspondance Mvi faisant référence à une carte de trajectoire téléchargée par un véhicule ou d'autres terminaux, et la carte de trajectoire mise en correspondance Ms faisant référence à une carte de trajectoire préenregistrée dans un serveur ;

un dispositif de transformation de mise en correspondance d'éléments cartographiques (203) configuré pour effectuer une transformation de mise en correspondance d'éléments cartographiques entre la carte de trajectoire à mettre en correspondance Mvi et la carte de trajectoire mise en correspondance Ms en fonction de données de signalisation routière, dans lequel la mise en correspondance d'éléments cartographiques consiste à sélectionner une signalisation routière dans la carte de trajectoire à mettre en correspondance Mvi et à trouver ensuite une signalisation routière identique ou similaire à la signalisation routière sélectionnée dans la carte de trajectoire mise en correspondance Ms, dans lequel, après la transformation d'éléments cartographiques, la carte de trajectoire à mettre en correspondance Mvi et la carte de trajectoire mise en correspondance Ms sont appelées respectivement carte Mvi-X1 et carte Ms-X1 ;

un dispositif de transformation de mise en correspondance de signalisations routières (204) configuré pour effectuer une transformation de mise en correspondance de signalisations routières entre la carte Mvi-X1 et la carte Ms-X1 en fonction de données routières, l'opération consistant à effectuer la transformation de mise en correspondance de signalisations routières entre la carte Mvi-X1 et la carte Ms-X1 consistant à : mettre en correspondance les données routières ; mettre en correspondance les signalisations routières contenues dans les routes mises en correspondance dans la carte Mvi-X1 et la carte Ms-X1 ; en fonction des données des signalisations routières mises en correspondance, calculer (B3) une matrice de transformation de route ; et en fonction de la matrice de transformation de route, effectuer (B4) une rotation et une translation des éléments cartographiques d'une route mise en correspondance dans la carte Mvi-X1 et des éléments cartographiques d'une route mise en correspondance dans la carte Ms-X1, dans lequel les données de route mise en correspondance font référence à la sélection d'une route dans la carte Mvi-X1 et à la recherche subséquente d'une route identique ou similaire à la route sélectionnée dans la carte Ms-X1, dans lequel, après la transformation de mise en correspondance de signalisations routières, la carte Mvi-X1 et la carte Ms-X1 sont appelées respectivement carte Mvi-X2 et carte Ms-X2 ;

un dispositif de fusion de données caractéristiques de signalisations routières (205) configuré pour fusionner les données caractéristiques des signalisations routières mises en correspondance dans la carte Mvi-X2 et la carte Ms-X2 en utilisant une méthode de moyenne pondérée, et remplacer les données caractéristiques correspondantes dans la carte Ms-X2 en utilisant les données caractéristiques de la signalisation routière obtenues après la fusion, dans lequel la carte Ms-X2 dont les données caractéristiques de la signalisation routière ont été remplacées est appelée carte Ms-X3 ; et

un dispositif d'ajout (206) configuré pour ajouter des routes et éléments cartographiques de route dans la carte Mvi-X1 qui ne peuvent pas être mis en correspondance dans la carte Ms-X3, dans lequel la carte Ms-X3 avec les routes ajoutées est appelée carte Ms-X4.

**8.** Système de construction de carte selon la revendication 7, **caractérisé en ce que** le système comprend en outre :

un dispositif de transformation de mise en correspondance de route intra-carte (207) configuré pour déterminer si une maturité totale des éléments cartographiques de la carte Ms-X4 est supérieure à un seuil de maturité prédéfini, la maturité totale des éléments cartographiques de la carte Ms-X4 faisant référence à une valeur numérique obtenue en additionnant les maturités de tous les éléments cartographiques de la carte Ms-X4, la maturité d'un élément cartographique étant déterminée par le nombre de fois où il a été mis en correspondance, et, dans l'affirmative, effectuer une transformation de mise en correspondance de route intra-carte, la transformation de mise en correspondance de route intra-carte consistant à mettre en correspondance des données de route intra-carte, mettre en correspondance des signalisations routières contenues dans une route mise en correspondance et, en fonction des données des signalisations routières mises en correspondance, calculer une première matrice de transformation de route, dans lequel, après la transformation de mise en correspondance de route intra-carte, la carte Ms-X4 est appelée carte Ms-X5 ; et

un dispositif de fusion de mise en correspondance intra-route (208) configuré pour fusionner les données caractéristiques des signalisations routières mises en correspondance respectives en utilisant une méthode de moyenne pondérée, et remplacer les données caractéristiques d'une signalisation routière correspondante dans la carte Ms-X5 en utilisant les données caractéristiques de la signalisation routière obtenues après la fusion, dans lequel la carte Ms-X5 dont les données caractéristiques de la signalisation routière ont été remplacées est appelée carte Ms-X6.

9. Système de construction de carte selon la revendication 8, **caractérisé en ce que** le système comprend en outre un dispositif de suppression (209), le dispositif de suppression (209) étant configuré pour :

déterminer si une condition de démarrage d'une étape de suppression des éléments cartographiques de faible qualité est satisfaite ; lorsque la carte Ms-X5 a été générée, la condition est satisfaite ;
après qu'il a été déterminé que la condition de démarrage de l'étape de suppression des éléments cartographiques de faible qualité est satisfaite, déterminer si les qualités des éléments cartographiques satisfont à la condition de suppression consiste à :

déterminer si une durée de mise à jour d'un élément cartographique cible est supérieure à un premier seuil de durée prédéfini et, dans l'affirmative, considérer que l'élément cartographique cible est un élément cartographique de faible qualité et que la condition de suppression est satisfaite ;
ou
déterminer si une durée de mise à jour d'un élément cartographique cible est supérieure à un second seuil de durée prédéfini et si une maturité est inférieure à un premier seuil de maturité et, dans l'affirmative, considérer que l'élément cartographique cible est un élément cartographique de faible qualité et que la condition de suppression est satisfaite ; et
supprimer les éléments cartographiques de faible qualité qui satisfont la condition de suppression.

10. Système de construction de carte selon la revendication 7, **caractérisé en ce que** l'opération consistant à rechercher la carte de trajectoire mise en correspondance Ms qui correspond à la carte de trajectoire à mettre en correspondance Mvi consiste à :

en fonction de données d'identification de la carte de trajectoire à mettre en correspondance Mvi, rechercher une carte de trajectoire mise en correspondance Ms qui correspond à la carte de trajectoire à mettre en correspondance Mvi ;
dans lequel, lorsqu'une carte de trajectoire sur un serveur Mvi a des données d'identification identiques ou similaires aux données d'identification de la carte de trajectoire à mettre en correspondance Mvi, la carte de trajectoire sur le serveur Mvi et la carte de trajectoire à mettre en correspondance Mvi sont considérées comme étant mises en correspondance.

11. Système de construction de carte selon la revendication 7, **caractérisé en ce que** l'opération consistant à effectuer une transformation de mise en correspondance d'éléments cartographiques entre la carte de trajectoire à mettre en correspondance Mvi et la carte de trajectoire mise en correspondance Ms consiste à :

mettre en correspondance des données de signalisation routière ;
en fonction des données de signalisation routière mises en correspondance, calculer une matrice de transformation de carte ; et
en fonction de la matrice de transformation de carte, effectuer une rotation et une translation des éléments cartographiques dans la carte de trajectoire à mettre en correspondance Mvi et la carte de trajectoire mise en correspondance Ms.

12. Support de stockage lisible par ordinateur, **caractérisé en ce que** le support de stockage lisible par ordinateur stocke un programme d'ordinateur et que le programme d'ordinateur permet à un ordinateur de mettre en œuvre le procédé de construction de carte selon l'une quelconque des revendications 1 à 6.

receiving, by a server side, an uploaded trajectory map to be matched Mvi — 101

↓

searching, by the server side, for a matched trajectory map Ms that matches with the trajectory map to be matched Mvi — 102

↓

performing map-element matching transformation between the trajectory map to be matched Mvi and the matched trajectory map Ms — 103

↓

performing road-sign matching transformation between the trajectory map to be matched Mvi-X1 and the matched trajectory map Ms-X1 that are obtained after the map-element matching transformation — 104

↓

fusing characteristic data of road signs matched in the map Mvi-X2 and the map Ms-X2 by using a weighted averaging method, and replacing corresponding characteristic data in the map Ms-X2 by using the characteristic data of the road sign obtained after the fusion — 105

↓

adding roads and road map elements in the map Mvi-X1 that are not able to be matched into the map Ms-X3 — 106

↓

determining whether a total maturity of map elements of the map Ms-X4 is greater than a preset maturity threshold, and if yes, performing intra-map road matching transformation — 107

↓

fusing characteristic data of respective matched road signs by using a weighted averaging method, and replacing characteristic data of a corresponding road sign in the map Ms-X5 by using the characteristic data of the road sign obtained after the fusion — 108

↓

removing low-quality map elements — 109

Fig. 1

| receiving device | 201 |

↓

| map matching device | 202 |

↓

| map-element-matching-transformation device | 203 |

↓

| road-sign-matching-transformation device | 204 |

↓

| road-sign-characteristic-data fusing device | 205 |

↓

| adding device | 206 |

↓

| intra-map-road-matching-transformation device | 207 |

↓

| post-intra-road-matching-fusion device | 208 |

↓

| removing device | 209 |

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200074193 A1